(19) Europäisches Patentamt
European Patent Office
Office européen des brevets

(11) **EP 4 580 201 A1**

(12) **EUROPEAN PATENT APPLICATION**
published in accordance with Art. 153(4) EPC

(43) Date of publication:
**02.07.2025 Bulletin 2025/27**

(21) Application number: **23863337.4**

(22) Date of filing: **24.07.2023**

(51) International Patent Classification (IPC):
*H04N 23/55* (2023.01)   *H04N 23/54* (2023.01)
*G03B 17/12* (2021.01)   *G02B 1/00* (2006.01)
*G06N 3/08* (2023.01)   *G06V 10/774* (2022.01)
*G06V 20/70* (2022.01)   *G06V 10/80* (2022.01)
*G06N 3/045* (2023.01)

(52) Cooperative Patent Classification (CPC):
**G02B 1/00; G03B 17/12; G06N 3/045; G06N 3/08;
G06V 10/774; G06V 10/80; G06V 20/70;
H04N 23/54; H04N 23/55**

(86) International application number:
**PCT/KR2023/010687**

(87) International publication number:
**WO 2024/053856 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **08.09.2022   KR 20220114496
12.12.2022   KR 20220173058**

(71) Applicant: **Samsung Electronics Co., Ltd.
Suwon-si, Gyeonggi-do 16677 (KR)**

(72) Inventors:
• **LEE, Jungmin**
 **Suwon-si, Gyeonggi-do 16677 (KR)**
• **PARK, Youngo**
 **Suwon-si, Gyeonggi-do 16677 (KR)**
• **CHOI, Kwangpyo**
 **Suwon-si, Gyeonggi-do 16677 (KR)**

(74) Representative: **Appleyard Lees IP LLP
15 Clare Road
Halifax HX1 2HY (GB)**

(54) **ELECTRONIC DEVICE FOR PROCESSING IMAGES ACQUIRED USING META-LENS, AND OPERATION METHOD THEREOF**

(57)     Provided are an electronic device for obtaining a result of recognizing an object from an image obtained using a metalens, and an operation method of the electronic device. The electronic device according to an embodiment of the present disclosure may include a metalens having a pattern formed on a surface thereof and consisting of a plurality of pillars or pins having different shapes, heights, and areas from each other, and having optical properties that modulate a phase of light reflected from an object through the pattern on the surface, an image sensor configured to obtain a coded image by receiving light reflected from the object and phase-modulated by penetrating through the metalens, and converting the received light into electrical signals, and at least one processor configured to input the coded image to an artificial intelligence (AI) model, and obtain a label indicating a result of recognizing the object through inference using the AI model.

FIG. 1

EP 4 580 201 A1

## Description

### Technical Field

The present disclosure relates to an electronic device for processing images obtained using a metalens, and an operation method thereof. Specifically, the present disclosure provides an electronic device for performing image processing for detection, classification, or segmentation of objects from coded images by using an artificial intelligence (AI) model.

### Background Art

Recently, cameras have been installed in home appliances or Internet of Things (IoT) devices, such as TVs, refrigerators, or robot vacuum cleaners, and images captured by cameras are increasingly being used for monitoring subjects. With advancement in artificial intelligence (AI) technology based on vision recognition, there is a risk of leakage of personal information due to hijacking or hacking of image data when cameras are used for monitoring in places where personal privacy should not be exposed, such as at home or in indoor environments.

Conventional methods for preventing leakage of personal information may include a method using an event camera that does not obtain a red, green, and blue (RGB) image by receiving light reflected from an object, but obtains an image, based on the degree of change in brightness (intensity) of the light. Event cameras are advantageous in terms of privacy protection and prevention of personal information leakage because they do not obtain RGB images that are visually identifiable to a human. However, a method using an event camera has a limitation in that the event camera can obtain an image only when there is a change in the intensity of light.

### Disclosure of Invention

### Technical Solution

According to an aspect of the present disclosure, an electronic device for obtaining a result of recognizing an object from an image obtained through a metalens. According to an embodiment of the present disclosure, the electronic device may include a metalens having a pattern formed on a surface thereof and consisting of a plurality of pillars or pins having different shapes, heights, and areas from each other, and having optical properties that modulate a phase of light reflected from the object through the pattern on the surface. According to an embodiment of the present disclosure, the electronic device may include an image sensor configured to obtain a coded image by receiving light reflected from the object and phase-modulated by penetrating through the metalens and converting the received light into electrical signals. According to an embodiment of the present disclosure, the electronic device may include at least one processor configured to input the coded image to an artificial intelligence (AI) model and obtain a label corresponding to a result of recognizing the object by performing inference using the AI model. In an embodiment of the present disclosure, the AI model may be a neural network model trained to obtain a simulated image by inputting a red, green, and blue (RGB) image to a model reflecting the optical properties of the metalens and to output a label indicating a ground truth for the input RGB image as a result of recognition of the obtained simulated image. In an embodiment of the present disclosure, the AI model may be trained to minimize information indicating similarity between the RGB image and the simulated image.

According to another aspect of the present disclosure, a method, performed by an electronic device, of recognizing an object from an image obtained through a metalens is provided. The method may include obtaining a coded image by receiving light reflected from the object and phase-modulated by penetrating through the metalens and converting the received light into electrical signals. The method may include inputting the coded image to an AI model, and obtaining a label indicating the result of recognizing the object by performing inference using the AI model.

According to another aspect of the present disclosure, a computer program product including a computer-readable storage medium is provided. The storage medium may include instructions that are readable by an electronic device to obtain a coded image by receiving light reflected from an object and phase-modulated by penetrating through a metalens and converting the received light into electrical signals, and input the coded image to an AI model and obtain a label indicating a result of recognizing the object by performing inference using the AI model.

### Brief Description of Drawings

The present disclosure will be easily understood from the following description taken in conjunction with the accompanying drawings in which reference numerals denote structural elements.

FIG. 1 is a conceptual diagram illustrating operations in which an electronic device obtains a coded image by using a metalens and outputs a vision recognition result by using an artificial intelligence (AI) model, according to an embodiment of the present disclosure.

FIG. 2 is a diagram illustrating a method of training an AI model, according to an embodiment of the present disclosure.

FIG. 3 is a block diagram illustrating components of an electronic device according to an embodiment of the present disclosure.

FIG. 4 is a block diagram illustrating components of an electronic device and a server, according to an embodiment of the present disclosure.

FIG. 5 is a flowchart of a method, performed by an electronic device, of obtaining a vision recognition result from an image obtained using a metalens. according to an embodiment of the present disclosure.

FIG. 6 is a perspective view illustrating a shape of a surface pattern of a metalens, according to an embodiment of the present disclosure.

FIG. 7 is a diagram illustrating a method of training an AI model, according to an embodiment of the present disclosure.

FIG. 8 is a diagram illustrating a method of training an AI model, according to an embodiment of the present disclosure.

FIG. 9 is a flowchart of a method, performed by an electronic device, of obtaining a vision recognition result by using an AI model that is changed according to the purpose or use of a vision task, according to an embodiment of the present disclosure.

FIG. 10 is a diagram illustrating an operation in which an electronic device changes a configuration of an AI model according to the purpose or use of a vision task, according to an embodiment of the present disclosure.

FIG. 11 is a diagram illustrating an operation in which an electronic device changes a configuration of an AI model according to the purpose or use of a vision task, according to an embodiment of the present disclosure.

FIG. 12 is a flowchart of a method, performed by an electronic device, of changing a configuration of an AI model in response to replacement or change of a metalens being recognized, according to an embodiment of the present disclosure.

FIG. 13 is a diagram illustrating an operation in which an electronic device changes a configuration of an AI model in response to replacement or change of a metalens being recognized, according to an embodiment of the present disclosure.

FIG. 14 is a diagram illustrating an operation in which an electronic device obtains a vision recognition result by using a depth sensor and an audio sensor, as well as a camera system including a metalens, according to an embodiment of the present disclosure.

FIG. 15 is a diagram illustrating an operation in which an electronic device obtains a vision recognition result by using a depth sensor and an audio sensor, as well as a camera system including a metalens, according to an embodiment of the present disclosure.

## Mode of the Invention

As the terms used in embodiments of the present specification, general terms that are currently widely used are selected by taking into account functions in the present disclosure, but these terms may vary according to the intention of one of ordinary skill in the art, precedent cases, advent of new technologies, etc. Furthermore, specific terms may be arbitrarily selected by the applicant, and in this case, the meaning of the selected terms will be described in detail in the detailed description of a corresponding embodiment. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by a person of ordinary skill in the art described in the present specification.

Throughout the present disclosure, when a part "includes" or "comprises" an element, unless there is a particular description contrary thereto, it is understood that the part may further include other elements, not excluding the other elements. Furthermore, terms, such as "portion," "module," etc., used herein indicate a unit for processing at least one function or operation, and may be implemented as hardware or software or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, in the present disclosure, when a component is referred to as being "connected" or "coupled" to another component, it should be understood that the component may be directly connected or coupled to the other component, but may also be connected or coupled to the other component via another intervening component therebetween unless there is a particular description contrary thereto.

As used herein, a 'metalens' is a lens that includes a metasurface composed of a pattern consisting of nano-sized pillars or pins and has optical properties that modulate a phase of light reflected from an object. In an embodiment of the present disclosure, a metasurface may be formed by a plurality of pillars or pins having different shapes, heights, and areas from each other.

In the present disclosure, a 'coded image' is an image obtained using light of which the phase is modulated by penetrating through a metalens. In an embodiment of the present disclosure, an image sensor may receive light of which the phase is modulated by penetrating through the metalens and obtain a coded image by converting the received light into electrical signals.

In the present disclosure, functions related to artificial intelligence (AI) are performed via a processor and a memory. The processor may be configured as one or a plurality of processors. In this case, the one or plurality of processors may be a general-purpose processor such as a CPU, an AP, a digital signal processor (DSP), etc., a dedicated graphics processor such as a graphics processing unit (GPU), a vision processing unit (VPU), etc., or a dedicated AI processor such as a neural processing unit (NPU). The one or plurality of processors control input data to be processed according to predefined operation rules or AI model stored in the memory. Alternatively, when the one or plurality of processors are a dedicated AI processor, the dedicated AI processor may be designed with a hardware structure specialized for processing a particular AI model.

The predefined operation rules or AI model are generated via a training process. In this case, the generation via the training process means that the predefined operation rules or AI model set to perform desired characteristics (or purposes) are created by training a base AI model based on a large number of training data via a learning algorithm. The training process may be performed by an apparatus itself on which AI according to the present disclosure is performed, or via a separate server and/or system. Examples of a learning algorithm include, but are not limited to, supervised learning, unsupervised learning, semi-supervised learning, and reinforcement learning.

In the present disclosure, an 'AI model' may consist of a plurality of neural network layers. Each of the plurality of neural network layers has a plurality of weights and performs neural network computations via calculations between a result of computations in a previous layer and the plurality of weights. A plurality of weights assigned to each of the plurality of neural network layers may be optimized by a result of training the AI model. For example, the plurality of weights may be updated to reduce or minimize a loss or cost value obtained in the AI model during a training process. An artificial neural network model may include a deep neural network (DNN), such as a convolutional neural network (CNN), a recurrent neural network (RNN), a restricted Boltzmann machine (RBM), a deep belief network (DBN), a bidirectional recurrent DNN (BRDNN), or a deep Q-network (DQN), but is not limited thereto.

As used in the present disclosure, 'vision recognition' refers to image signal processing that involves inputting a red, green, and blue (RGB) image or a coded image to an AI model and detecting an object in the input image, classifying the object into a specific category, or segmenting the object via inferencing using the AI model.

An embodiment of the present disclosure will be described more fully hereinafter with reference to the accompanying drawings so that the embodiment may be easily implemented by a person of ordinary skill in the art. However, the present disclosure may be implemented in different forms and should not be construed as being limited to embodiments set forth herein.

Hereinafter, embodiments of the present disclosure are described in detail with reference to the accompanying drawings.

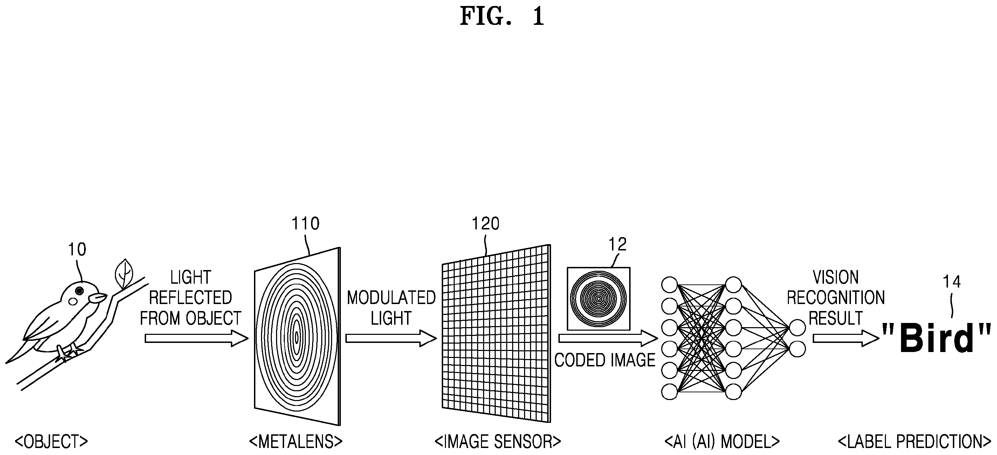

FIG. 1 is a conceptual diagram illustrating operations in which an electronic device obtains a coded image 12 by using a metalens 110 and outputs a vision recognition result by using an AI model 200, according to an embodiment of the present disclosure.

Referring to FIG. 1, the electronic device may include a metalens 110, an image sensor 120, and an AI model 200.

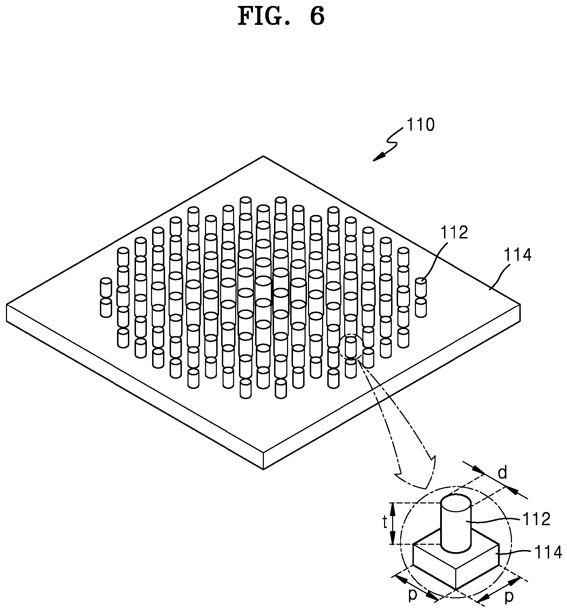

The metalens 110 is a lens including a metasurface composed of nano-sized pillars or pins. The metasurface is a three-dimensional (3D) surface having a pattern composed of a plurality of pillars or a plurality of pins having different heights and areas from each other, and a distance between the plurality of pillars or the plurality of pins may be different. The metalens 110 may have optical properties that encode light by changing the amount of light reflected from an object 10 and penetrating through the metasurface. In an embodiment of the present disclosure, the metalens 110 may induce a phase delay of light and modulate a phase of light by changing a refractive index of the light according to the pattern composed of the plurality of pillars or pins included in the metasurface. In an embodiment of the present disclosure, the height and area of the plurality of pillars or pins included in the metasurface and the distance therebetween may be determined by parameter values of a mathematically modeled model such as a point spread function (PSF) according to a result of training the AI model 200. The metasurface is described in detail with reference to FIG. 6.

The image sensor 120 is configured to receive light of which the phase is modulated by penetrating through the metalens 110 and obtain a coded image 12 by converting the received light into electrical signals. In an embodiment of the present disclosure, the image sensor 120 may consist of a complementary metal-oxide-semiconductor (CMOS), but is not limited thereto. The light reflected by the object 10 is phase-modulated by the metalens 110 due to a change in a refractive index, and the phase-modulated light is received by a specific pixel of the image sensor 120. The image sensor 120 may obtain the coded image 12 by converting the received light into an electrical signal.

The coded image 12 is an image obtained by light reflected from the object 10 being phase-modulated by the metalens 110 and the modulated light being received by the image sensor 120. The coded image 12 may be an image that is out of focus or distorted or modulated so that a shape of the object 10 cannot be identified by a human eye, unlike an RGB image.

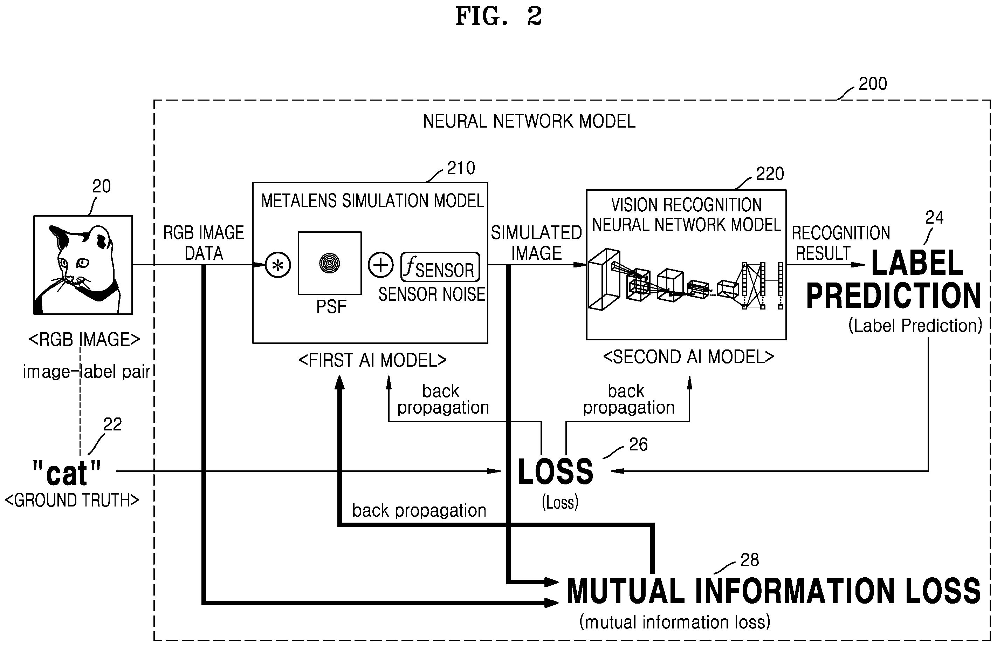

The electronic device may input the coded image 12 to the AI model 200, and obtain a label 14 indicating a result of recognition of the coded image 12 by performing inferencing using the AI model 200. The AI model 200 may be a neural network model trained via supervised learning to obtain a simulated image by inputting an RGB image to a model reflecting the optical properties of the metalens 110 and to output a label indicating a ground truth for the input RGB image as a result of recognition of the obtained simulated image. In an embodiment of the present disclosure, the AI model 200 may be implemented as a CNN model, but is not limited thereto. The AI model 200 may be implemented as, for example, an RNN, an RBM, a DBN, a BRDNN, a DQN, or the like. A specific embodiment related to training the AI model 200 is described in detail with reference to FIG. 2.

In the embodiment illustrated in FIG. 1, the electronic device may obtain a label of 'bird', which is a result of vision recognition of the coded image 12 input to the AI model 200, through inferencing using the trained AI model 200.

In recent years, home appliances or Internet of Things (IoT) devices, such as TVs, refrigerators, or robot vacuum cleaners, have been equipped with cameras, and images captured by the cameras are increasingly being used for target monitoring. With advancement in AI technology based on vision recognition, there is a risk of leakage of personal information due to hijacking or hacking of image data when cameras are used for monitoring in places where personal privacy should not be exposed, such as at home or in indoor environments. Event cameras used as a conventional method for preventing leakage of personal information obtain images based on the degree of changes in intensity of light, and thus they may not obtain RGB images that are visually identifiable to a human (human-readable). However, event cameras have a limitation in that they can obtain images only when there is a change in the intensity of light. In addition, recent advancements in AI technology have made it possible to reconstruct images that are visually identifiable to humans from images obtained through event cameras, and thus, a solution for protecting personal privacy and enhancing security is required.

The present disclosure is directed to provide an electronic device and an operation method thereof for obtaining the coded image 12 that is not visually identifiable to a human by using the metalens 110, and obtaining a vision recognition result from the coded image 12 in order to protect personal privacy and enhance security when a camera is used for monitoring or the like.

The electronic device according to the embodiment illustrated in FIG. 1 obtains the coded image 12 that cannot be visually identified and verified by a human by modulating light reflected from the object 10 via the metalens 110, thereby providing a technical effect of preventing the risk of leakage of personal information in advance and enhancing security even when used indoors such as at home. Furthermore, according to an embodiment of the present disclosure, the electronic device obtains a vision recognition result from the coded image 12 through inferencing using the trained AI model 200, thereby improving a recognition rate compared to existing methods (e.g., event cameras, etc.). In addition, because the metalens 110 does not require a plurality of lenses to receive light, unlike conventional camera lenses, the electronic device according to an embodiment of the present disclosure provides the effect of reducing lens thickness and implementing a small form factor by using the metalens 110.

FIG. 2 is a diagram illustrating a method of training the AI model 200, according to an embodiment of the present disclosure.

In an embodiment of the present disclosure, the AI model 200 illustrated in FIG. 2 may be included on-device within an electronic device. However, the present disclosure is not limited thereto, and in another embodiment of the present disclosure, the AI model 200 may be stored on a server or an external device.

The AI model 200 may be a model trained using supervised learning to output a label 22 corresponding to a ground truth paired with an RGB image 20 when the RGB image 20 is input. In an embodiment of the present disclosure, the AI model 200 may be an end-to-end neural network model trained to minimize a loss that is a difference between a label predicted from the RGB image 20 and the label corresponding to the ground truth.

Referring to FIG. 2, the AI model 200 may include a first AI model 210 and a second AI model 220.

The first AI model 210 may be a model trained to output a simulated image from the input RGB image 20 by reflecting the optical properties of the metalens (110 of FIG. 1). The first AI model 210 may include a differentiable mathematical model that mathematically models the optical properties of the metalens 110. The first AI model 210 may output a simulated image by inputting the RGB image 20 to the differentiable mathematical model. In an embodiment of the present disclosure, the first AI model 210 may model RGB image data via a mathematical equation by reflecting phase modulation by the metasurface of the metalens 110, and obtain a simulated image by performing convolution of the modeled RGB image 20 with a PSF that mathematically models focus distortion or modulation for each pixel of the RGB image 20. The 'simulated image' is an image generated by the differentiable mathematical model trained to reflect the optical properties of the metalens 110, and may be an image generated via simulation to be similar to an image obtained by the image sensor (120 of FIG. 1) by using light that has penetrated through the metalens 110.

In an embodiment of the present disclosure, the first AI model 210 may obtain a simulated image by adding simulated sensor noise in the image sensor 120 to a result of the convolution between the RGB image 20 and the PSF. The first AI model 210 may output the obtained simulated image to the second AI model 220.

The second AI model 220 may be a neural network model trained to output a predicted label according to a result of vision recognition from the input simulated image. In an embodiment of the present disclosure, the second AI model 220 may be implemented as a CNN model. However, the present disclosure is not limited thereto, and in another embodiment of the present disclosure, the second AI model 220 may be implemented as, for example, an RNN, an RBM, a DBN, a BRDNN, a DQN, or the like.

The AI model 200 may be a neural network model trained to update and optimize a plurality of weights of neural network layers included in the first AI model 210 and the second AI model 220 via backpropagation performed by applying a loss 26 that is a difference between a label 22, which is a ground truth of the input RGB image 20, and a label 24, which is predicted from the RGB image 20, to the first AI model 210 and the second AI model 220. In an embodiment of the present disclosure, the AI model 200 may be an end-to-end neural network model trained to output the label 22 that is the ground truth from the input RGB image 20. In an embodiment of the present disclosure, during a training process of the AI model 200, a gradient obtained using a partial derivative of an error function representing the loss 26 is applied and back-propagated from the second AI model 220 to the first AI model 210, and through this, the plurality of weights of the plurality of neural network layers included in the first AI model 210 and the second AI model 220 may be updated or optimized.

During the training process of the AI model 200, the first AI model 210 may be trained to minimize information indicating similarity between the input RGB image 20 and the output simulated image. In an embodiment of the present disclosure, the first AI model 210 may be trained using a loss (a mutual information loss 28) that is a mathematical quantification of a correlation between the RGB image 20 and the simulated image such that mutual information representing the correlation therebetween is minimized. For example, during the training process of the first AI model 210, a plurality of weights in the first AI model 210 may be updated via backpropagation that applies the mutual information loss 28 to the first AI model 210. The larger the correlation, e.g., the cross entropy (or CE), between the RGB image 20 and the simulated image, the more likely a human-readable image may be reconstructed from the simulated image output by the first AI model 210 when the simulated image is leaked, and thus, the first AI model 210 may be trained via backpropagation using the value of the mutual information loss 28.

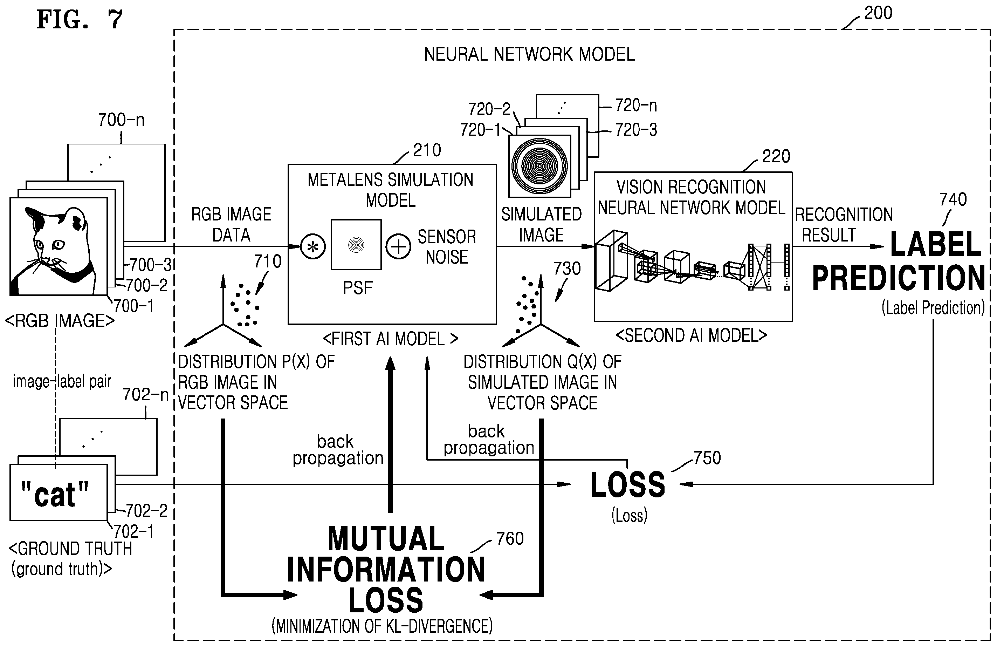

In an embodiment of the present disclosure, a method of minimizing the Kullback-Leibler divergence (KL-divergence), which mathematically represents dissimilarity in a correlation between a distribution of the input RGB image 20 in a vector space and a distribution of the simulated image in a vector space, may be used to minimize the correlation between the RGB image 20 and the simulated image during the training process of the first AI model 210. A specific embodiment in which the first AI model 210 is trained by minimizing the KL- divergence is described in more detail with reference to FIG. 7.

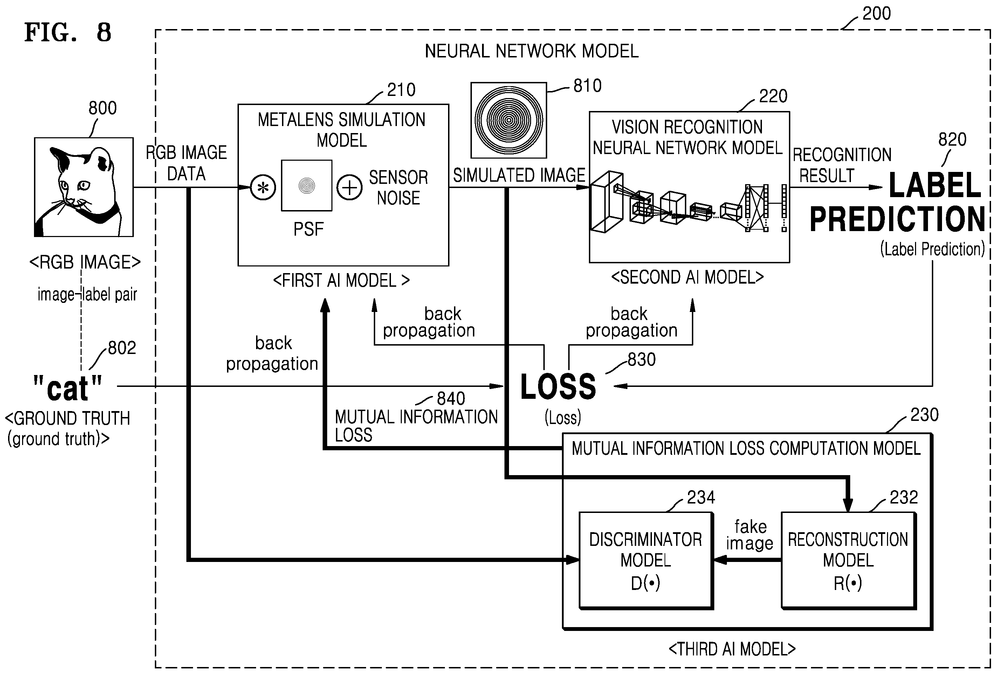

In an embodiment of the present disclosure, the AI model 200 may further include a third AI model for computing the value of the mutual information loss 28 between the RGB image 20 and the simulated image. The third AI model may include a reconstruction model trained to generate a fake image that imitates the RGB image 20 based on the simulated image, and a discriminator model that determines whether the input image is the RGB image 20 or the fake image generated by the reconstruction model. The third AI model may calculate the value of the mutual information loss 28 based on output values of the reconstruction model and the discriminator model. The first AI model 210 may be trained to minimize the value of the mutual information loss 28 via backpropagation that applies the mutual information loss 28. A specific embodiment in which the first AI model 210 is trained by applying the value of the mutual information loss 28 calculated by the third AI model is described in more detail with reference to FIG. 8.

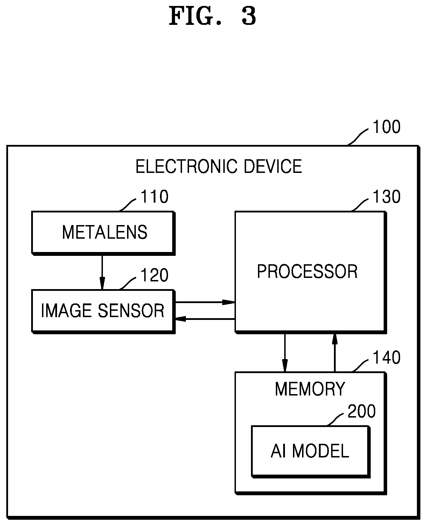

FIG. 3 is a block diagram illustrating components of an electronic device 100 according to an embodiment of the present disclosure.

The electronic device 100 may be implemented as a smartphone, a tablet personal computer (PC), a laptop computer, a digital camera, an e-book terminal, a digital broadcasting terminal, a personal digital assistant (PDA), a portable multimedia player (PMP), a navigation device, an MP3 player, or the like, including a camera system. In an embodiment of the present disclosure, the electronic device 100 may be a home appliance such as a smart TV, an air conditioner, a robot vacuum cleaner, or a clothes manager, including a camera. However, the present disclosure is not limited thereto, and in another embodiment of the present disclosure, the electronic device 100 may be implemented as a wearable device, such as a smartwatch, an eyeglass-shaped augmented reality (AR) device (e.g., AR glasses), or a head-mounted device (HMD).

Referring to FIG. 3, the electronic device 100 may include a metalens 110, an image sensor 120, a processor 130, and a memory 140. The image sensor 120, the processor 130, and the memory 140 may be electrically and/or physically connected to each other. FIG. 3 illustrates only essential components for describing operations of the electronic device 100, and the components included in the electronic device 100 are not limited to those shown in FIG. 3. In an embodiment of the present disclosure, the electronic device 100 may further include a depth sensor or an audio sensor. When the electronic device 100 is implemented as a mobile device, the electronic device 100 may further include a battery that supplies power to the image sensor 120 and the processor 130.

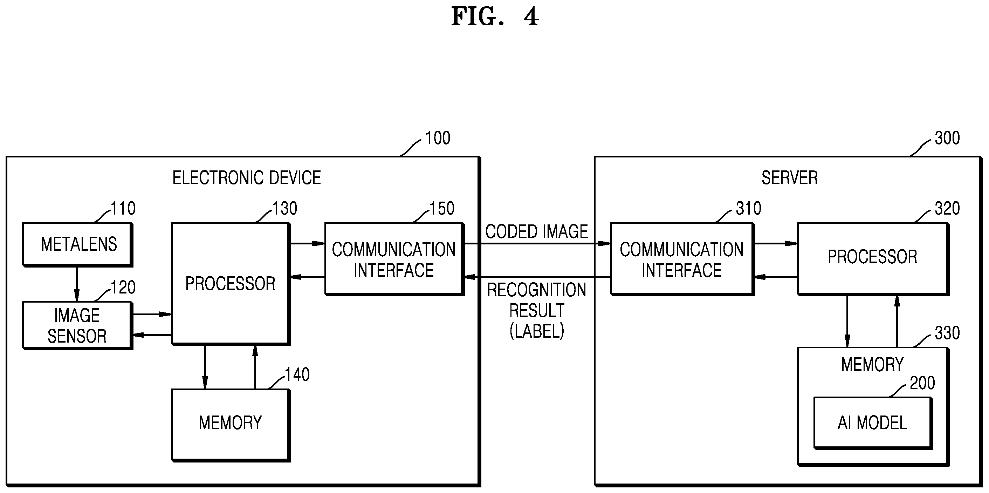

In an embodiment of the present disclosure, the electronic device 100 may further include a communication interface (150 of FIG. 4) configured to perform data communication with a server or an external device. An embodiment in which the electronic device 100 includes the communication interface 150 is described in more detail with reference to FIG. 4.

The metalens 110 is a lens having optical properties that change the amount of light reflected from the object and penetrating therethrough and modulate or distort the phase of light by refracting or diffracting the light. The metalens 110 may include a metasurface composed of a plurality of pillars or pins having a nanoscale size. The metasurface is a 3D surface having a pattern composed of a plurality of pillars or a plurality of pins having different heights and areas from each other, and a distance between the plurality of pillars or the plurality of pins may be different. The metalens 110 may have optical properties that encode light reflected from an object 10 through the metasurface. In an embodiment of the present disclosure, the metalens 110 may change a refractive index of light according to a pattern composed of a plurality of pillars or pins included in the metasurface, thereby inducing a phase delay of the light and modulating a phase of the light.

The image sensor 120 is configured to receive light of which the phase is modulated by penetrating through the metalens 110 and obtain a coded image by converting the received light into electrical signals. In an embodiment of the present disclosure, the image sensor 120 may consist of a CMOS, but is not limited thereto. The light reflected by the object 10 is phase-modulated by the metalens 110 due to a change in a refractive index, and the phase-modulated light is received by a specific pixel in the image sensor 120. The image sensor 120 may obtain the coded image by converting the received light into electrical signals. The image sensor 120 may provide image data of the obtained coded image to the processor 130.

The processor 130 may execute one or more instructions of a program stored in the memory 140. The processor 130 may be composed of hardware components that perform arithmetic, logic, and input/output (I/O) operations, and image processing. The processor 130 is shown as an element in FIG. 3, but is not limited thereto. In an embodiment of the present disclosure, the processor 130 may be configured as one or more elements. The processor 130 may be a general-purpose processor such as a CPU, an AP, a DSP, etc., a dedicated graphics processor such as a GPU, a VPU, etc., or a dedicated AI processor such as an NPU. The processor 130 may control input data to be processed according to predefined operation rules or the AI model 200 stored in the memory 140. Alternatively, when the processor 130 is a dedicated AI processor, the dedicated AI processor may be designed with a hardware structure specialized for processing a particular AI model.

The memory 140 may include at least one type of storage medium, i.e., at least one of, for example, a flash memory-type memory, a hard disk-type memory, a multimedia card micro-type memory, a card-type memory (e.g., a Secure Digital (SD) card or an eXtreme Digital (XD) memory), random access memory (RAM), static RAM (SRAM), read-only memory (ROM), electrically erasable programmable ROM (EEPROM), PROM, or an optical disc.

The memory 140 may store instructions related to operations in which the electronic device 100 obtains a vision recognition result from a coded image obtained through the metalens 110 and the image sensor 120. In an embodiment of the present disclosure, the memory 140 may store at least one of instructions, algorithms, data structures, program code, and application programs readable by the processor 130. The instructions, algorithms, data structures, and program code stored in the memory 140 may be implemented in programming or scripting languages such as C, C++, Java, assembler, etc.

Hereinafter, functions or operations that the processor 130 performs by executing instructions or program code included in modules stored in the memory 140 are described.

The processor 130 may obtain a coded image through the metalens 110 and the image sensor 120. The processor 130 may input the coded image to the AI model 200, and obtain a label indicating a result of recognition of the coded image by performing inference using the AI model 200.

In the embodiment illustrated in FIG. 3, the AI model 200 may be stored on the electronic device 100 in an on-device manner. In an embodiment of the present disclosure, the memory 140 may store instructions, algorithms, data structures, or program code that constitute the AI model 200.

The AI model 200 may be a neural network model trained via supervised learning to obtain a simulated image by inputting an RGB image to a model reflecting the optical properties of the metalens 110 and to output a label indicating a ground truth for the input RGB image as a result of recognition of the obtained simulated image. In an embodiment of the present disclosure, the AI model 200 may be implemented as a CNN model, but is not limited thereto. The AI model 200 may be implemented as, for example, an RNN, an RBM, a DBN, a BRDNN, a DQN, or the like. Because a specific method of training the AI model 200 is the same as the method described with reference to FIG. 2, redundant descriptions are omitted herein.

In an embodiment of the present disclosure, a 'label' obtained as a result of inference through the AI model 200

may be classification information of an object included in an input coded image. For example, when an object of which image is captured through the metalens 110 and the image sensor 120 is a cat, the AI model 200 may output a probability value indicating a likelihood that the object is classified as a label indicating 'cat'. However, the present disclosure is not limited thereto, and the processor 130 may detect an object from a coded image or segment the object, as a result of vision recognition using the AI model 200.

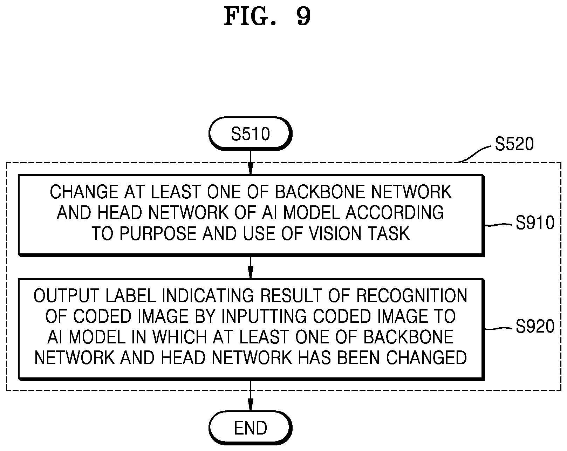

In an embodiment of the present disclosure, the AI model 200 may include a backbone network trained to extract a feature map from an input coded image and a head network trained to output a label indicating a result of recognition of the coded image from the feature map. The processor 130 may change at least one of a backbone network and a head network based on the purpose or use of a vision task to be recognized by using the AI model 200. In an embodiment of the present disclosure, the AI model 200 may include a plurality of backbone networks and a plurality of head networks. The processor 130 may select, among the plurality of backbone networks, a backbone network optimized according to the purpose or use of a vision task, and change a backbone network of the AI model 200 to the selected backbone network. Furthermore, the processor 130 may select, among the plurality of head networks, a head network optimized according to the purpose or use of the vision task, and change a head network of the AI model 200 to the selected head network. In an embodiment of the present disclosure, when the head network is changed according to the purpose or use of the vision task, the same backbone network may be applied regardless of the vision task. In this case, a structure of the backbone network may also be shared by the changed head network. A specific embodiment in which the processor 130 changes at least one of a backbone network and a head network based on the purpose or use of a vision task is described in detail with reference to FIGS. 9 to 11.

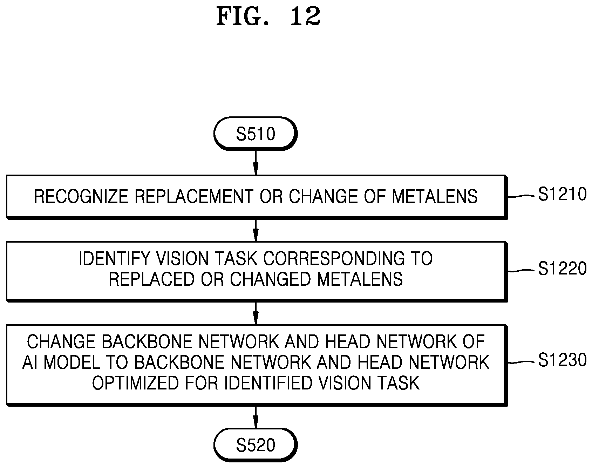

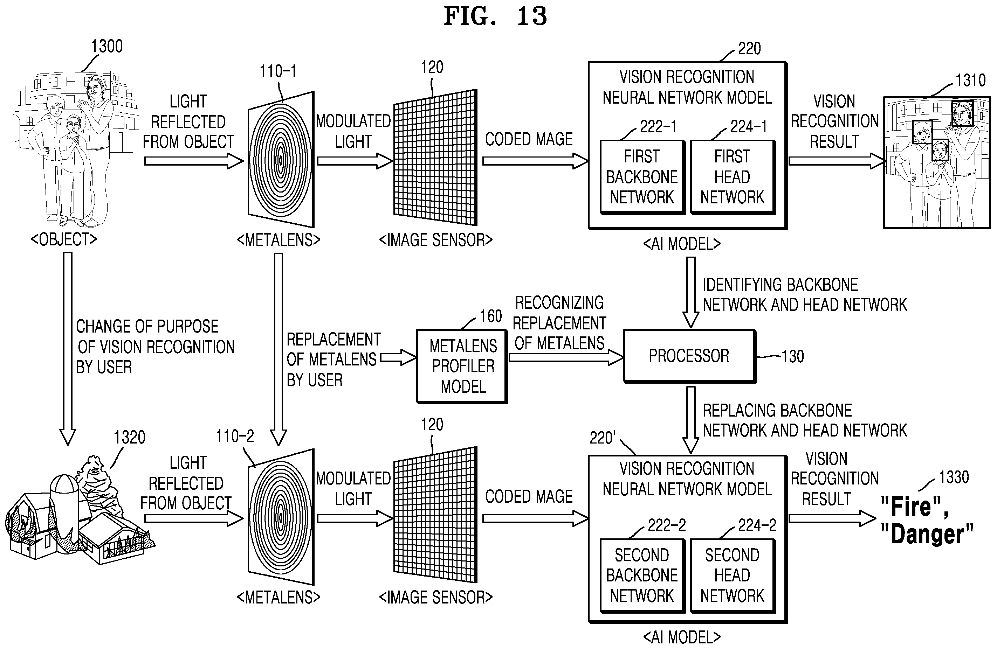

In an embodiment of the present disclosure, the AI model 200 may further include a metalens profiler model used to recognize replacement or change of the metalens 110 by a user. The processor 130 may recognize replacement or change of the metalens 110 by the user via the metalens profiler model. When the replacement or change of the metalens 110 is recognized, the processor 130 may identify a vision task corresponding to the replaced or changed metalens 110, and change the backbone network and head network of the AI model 200 to a backbone network and a head network that are predetermined as models optimized for the identified vision task. A specific embodiment in which the processor 130 changes the backbone network and head network of the AI model 200 according to replacement or change of the metalens 110 by the user is described in more detail with reference to FIGS. 12 and 13.

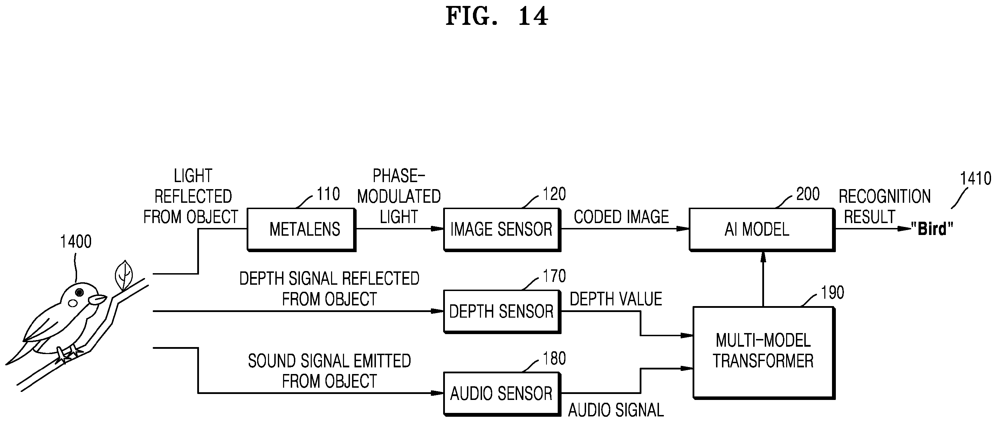

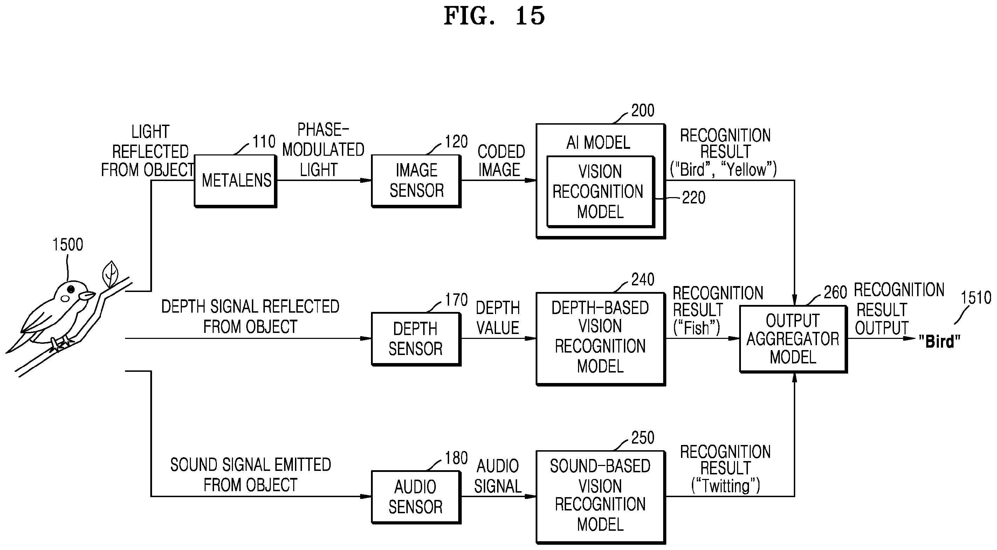

In an embodiment of the present disclosure, the electronic device 100 may further include a depth sensor or an audio sensor. The processor 130 may obtain depth value information of the object from the depth sensor, and obtain an audio signal emitted by the object from the audio sensor. The processor 130 may obtain a result of vision recognition of a coded image via inferencing using the AI model 200. A specific embodiment in which the processor 130 obtains a result of vision recognition of a coded image by using a depth value and an audio signal is described in more detail with reference to FIGS. 14 and 15.

FIG. 4 is a block diagram illustrating components of the electronic device 100 and a server 300, according to an embodiment of the present disclosure.

Referring to FIG. 4, the electronic device 100 may further include the communication interface 150 that performs data communication with the server 300. The metalens 110, the image sensor 120, and the processor 130 included in the electronic device 100 are substantially the same as the metalens 110, the image sensor 120, and the processor 130 illustrated in FIG. 3, respectively, and therefore, redundant descriptions are omitted.

The communication interface 150 may transmit and receive data to and from the server 300 over a wired or wireless communication network, and process the data. The communication interface 150 may perform data communication with the server 300 by using at least one of data communication methods including, for example, wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication. However, the present disclosure is not limited thereto, and when the electronic device 100 is implemented as a mobile device, the communication interface 150 may transmit and receive data to and from the server 300 over a network that conforms to mobile communication standards such as code division multiple access (CDMA), wideband CDMA (WCDMA), 3rd generation (3G), 4th generation (4G), 5th generation (5G), and/or a communication method using millimeter waves (mmWave).

In an embodiment of the present disclosure, the communication interface 150 may, according to control by the processor 130, transmit a coded image to the server 300 and receive from the server 300 a label indicating a result of recognition of the coded image via the AI model 200. The communication interface 150 may provide information about the label received from the server 300 to the processor 130.

The server 300 may include a communication interface 310 for communicating with the electronic device 100, a memory 330 for storing at least one instruction or program code, and a processor 320 configured to execute the at least one instruction or program code stored in the memory 330.

The memory 330 of the server 300 may store a trained AI model 200 may be stored in the memory 330 of the server 300. Because the AI model 200 stored in the server 300 is the same as the AI model 200 illustrated and described in FIGS. 1 and 2, redundant descriptions are omitted herein. The server 300 may obtain image data of the coded image from the electronic device 100 via the communication interface 310. The processor 320 of the server 300 may input the coded image to the AI model 200, and obtain a label indicating a result of recognition of the obtained coded image by performing inference using the AI model 200. The processor 320 may control the communication interface 310 to transmit data of the label to the electronic device 100.

In general, the electronic device 100 may have limited storage capacity of the memory (140 of FIG. 3), computational processing speed of the processor (130 of FIG. 3), ability to collect training datasets, etc., as compared to the server 300. Thus, after performing an operation requiring the storage of a large amount of data and a large number of computations, the server 300 may transmit necessary data (e.g., image data of the coded image) and/or data (e.g., a label) corresponding to a vision recognition result to the electronic device 100 via a communication network. Then, the electronic device 100 may receive and use the data indicating the vision recognition result from the server 300 without the need for a processor having a large capacity memory and the ability to perform fast computation, thereby reducing the processing time required for vision recognition of the coded image and improving the accuracy of the vision recognition.

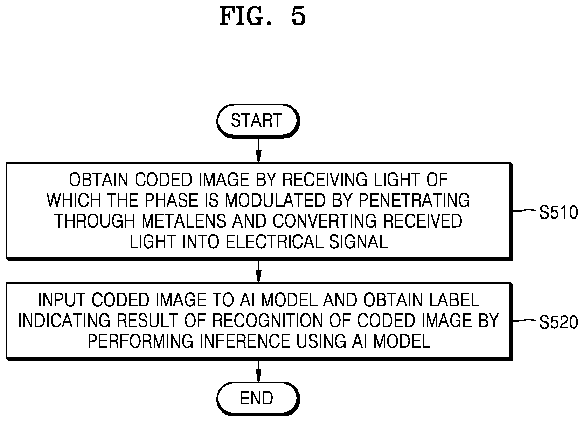

FIG. 5 is a flowchart of a method, performed by the electronic device 100, of obtaining a vision recognition result from an image obtained using a metalens, according to an embodiment of the present

In operation S510, the electronic device 100 obtains a coded image by receiving light of which the phase is modulated by penetrating through the metalens and converting the received light into electrical signals. Light reflected by an object to be captured may be phase-modulated by the metalens (110 of FIGS. 1, 3, and 4) due to a change in refractive index. The phase-modulated light is received by a specific pixel in the image sensor (120 of FIGS. 1, 3, and 4), and the electronic device 100 may obtain a coded image by converting the light received through the image sensor 120 into an electrical signal.

The 'coded image' is an image obtained by the light reflected from the object being phase-modulated by the metalens 110 and the modulated light being received by the image sensor 120. In an embodiment of the present disclosure, the coded image may be an image that is out of focus or distorted or modulated so that a shape of the object cannot be identified by the human eye, unlike an RGB image.

In operation S520, the electronic device 100 inputs the coded image to an AI model, and obtains a label indicating a result of recognition of the coded image by performing inference using the AI model. The 'AI model' may be a neural network model trained via supervised learning to obtain a simulated image by inputting an RGB image to a model reflecting the optical properties of the metalens 110 and to output a label indicating a ground truth for the input RGB image as a result of recognition of the obtained simulated image. In an embodiment of the present disclosure, the AI model may be implemented as a CNN model, but is not limited thereto. The AI model may be implemented as, for example, an RNN, an RBM, a DBN, a BRDNN, a DQN, or the like. Because a method of training the AI model is the same as the method described with reference to FIG. 2, redundant descriptions are omitted herein.

The 'label' obtained as a result of the electronic device 100 performing inference using the AI model may be classification information of the object included in the coded image input to the AI model. For example, when the object of which image is captured through the metalens 110 and the image sensor 120 is a cat, the AI model 200 may output a probability value indicating a likelihood that the object is classified as a label indicating 'cat'. However, the present disclosure is not limited thereto, and as a result the electronic device 100 may output an object detected in the coded image, or obtain a result of segmentation of the object, as a result of inference using the AI model.

FIG. 6 is a perspective view illustrating a shape of a surface pattern of the metalens 110, according to an embodiment of the present disclosure.

Referring to FIG. 6, the metalens 110 may include a metasurface composed of a plurality of pillars 112 having a nanoscale size. The plurality of pillars 112 protrude upward from a substrate 114, and form a 3D surface pattern. Each of the plurality of pillars 112 may be formed to have a different height and a different area. In the embodiment illustrated in FIG. 6, the plurality of pillars 112 are shown as having a cylindrical shape, but the shape of the plurality of pillars 112 is not limited to a cylindrical shape. In another embodiment of the present disclosure, the shape of the plurality of pillars 112 may be a cylinder, a cone, a quadrangular column, or a combination thereof. The plurality of pillars 112 formed on the metasurface may also be replaced with an uneven or fin structure.

A height, an area, and a volume of each of the plurality of pillars 112 included in the metalens 110 and a distance between the plurality of pillars 112 may be determined based on model parameter values according to a result of training the AI model (200 of FIGS. 1 and 2). In an embodiment of the present disclosure, the AI model 200 may include a differentiable mathematical model that mathematically models a PSF representing the optical properties of the metalens 110 and sensor noise of the image sensor (120 of FIGS. 1 and 3), and the model parameters may be updated and optimized via supervised learning using pairs of input images and ground truths. The height, area, and volume of the plurality of pillars 112 in the metasurface and the distance between the plurality of pillars 112 may be determined based on a phase function that simulates phase modulation due to the optical properties of the metalens 110 among the model parameters optimized via training of the AI model 200. In an embodiment of the present disclosure, the phase function may be a formula that defines coefficients of a polynomial that mathematically represents the degree of phase modulation according to a distance from a center of the metalens 110.

FIG. 7 is a diagram illustrating a method of training the AI model 200, according to an embodiment of the present disclosure.

Referring to FIG. 7, the AI model 200 may be a model trained via supervised learning to input a plurality of RGB images 700-1 to 700-n and output a label 740 corresponding to ground truths 702-1 to 702-n that are paired with the plurality of RGB images 700-1 to 700-n. In an embodiment of the present disclosure, the AI model 200 may be an end-to-end neural network model trained to minimize a loss 750 that is a difference between the label 740 predicted from the plurality of RGB images 700-1 to 700-n and a label corresponding to the ground truths 702-1 to 702-n.

The AI model 200 may include a first AI model 210 and a second AI model 220. The specific methods of training the first AI model 210 and the second AI model 220 are the same as those described with reference to FIG. 2, so redundant descriptions are omitted herein.

The first AI model 210 may be trained to minimize information indicating similarity between the input plurality of RGB images 700-1 to 700-n and an output plurality of simulated images 720-1 to 720-n. In an embodiment of the present disclosure, the first AI model 210 may be trained by computing mutual information loss 760 that is a mathematical quantification of a correlation between the plurality of RGB images 700-1 to 700-n and the plurality of simulated images 720-1 to 720-n such that mutual information representing the correlation therebetween is minimized, and performing backpropagation using a value of the mutual information loss 760. For example, during a training process of the first AI model 210, a plurality of weights included in the first AI model 210 may be updated via backpropagation that applies the value of the mutual information loss 760 to the first AI model 210.

In the present disclosure, the 'correlation' refers to similarity in intensity values constituting an image between the plurality of RGB images 700-1 to 700-n and the plurality of simulated images 720-1 to 720-n, and may include information about whether a human-readable image similar to the plurality of RGB images 700-1 to 700-n may be reconstructed from the plurality of simulated images 720-1 to 720-n via a reconstruction model composed of a CNN model, etc. In an embodiment of the present disclosure, the electronic device 100 may obtain the value of the mutual information loss 760 by computing KL-divergence representing a correlation between distributions of the plurality of RGB images 700-1 to 700-n and the plurality of simulated images 720-1 to 720-n in vector spaces. The KL-divergence may be calculated by using Equation 1 below.

[Equation 1]

$$KL\big(P(x), Q(x)\big) = \sum P(x) log \frac{P(x)}{Q(x)}$$

In Equation 1, P(x) may be a probability mass function representing a distribution 710 of the plurality of RGB images 700-1 to 700-n, which are to be used to train the first AI model 210, in an n-dimensional vector space, and Q(x) may be a probability mass function representing a distribution 730 of the plurality of simulated images 720-1 to 720-n output by the first AI model 210 in an n-dimensional vector space. The cross entropy, which represents the correlation between the distributions 710 and 730 of the plurality of RGB images 700-1 to 700-n and the plurality of simulated images 720-1 to 720-n in an n-dimensional vector space, may be calculated by using Equation 2 below.

[Equation 2]

$$CE\big(P(x), Q(x)\big) = - \sum P(x) log Q(x)$$

Referring to Equations 1 and 2, the cross entropy is maximized when the KL-divergence is minimized. An increase in cross entropy means that dissimilarity between predicted output data and input data increases during a training process of an AI model. The first AI model 210 may be trained to update and optimize model parameters (e.g., weights between layers) by calculating KL-divergence, obtaining a value of the mutual information loss 760 based on the calculated KL-divergence, and performing backpropagation using the mutual information loss 760, thereby minimizing the KL-divergence. Because the cross entropy is maximized when the KL-divergence is minimized, dissimilarity between the plurality of RGB images 700-1 to 700-n and the plurality of simulated images 720-1 to 720-n may be maximized and the correlation may be minimized during the training process of the first AI model 210.

FIG. 8 is a diagram illustrating a method of training the AI model 200, according to an embodiment of the present disclosure.

Referring to FIG. 8, the AI model 200 may be a model trained using supervised learning to input an RGB image 800 and output a label 820 corresponding to a ground truth 802 that is paired with the input RGB image 800. In an embodiment of the present disclosure, the AI model 200 may be an end-to-end neural network model trained to minimize a loss 830 that is a difference between the label 820 predicted from the input RGB image 800 and a label corresponding to the ground truth 802.

In the embodiment illustrated in FIG. 8, the AI model 200 may include a first AI model 210, a second AI model 220, and a third AI model 230. Because the specific methods of training the first AI model 210 and the second AI model 220 are the same as those described with reference to FIG. 2, redundant descriptions are omitted herein.

The third AI model 230 may be a neural network model trained compute a mutual information loss 840 which is a mathematical quantification of a correlation representing similarity between the input RGB image 800 and a simulated image 810 output from the first AI model 210. For example, the third AI model 230 may be implemented as a generative adversarial network (GAN), but is not limited thereto. The third AI model 230 may include a reconstruction model 232 and a discriminator model 234.

The reconstruction model 232 may be a neural network model trained to generate a fake image that imitates the RGB image 800 based on the input simulated image 810. The reconstruction model 232 may provide the generated fake image to the discriminator model 234.

The discriminator model 234 may be a neural network model trained to determine whether the input image is the RGB image 800 or the fake image generated by the reconstruction model 232.

The third AI model 230 may calculate a value of the mutual information loss 840 based on output values of the reconstruction model 232 and the discriminator model 234. The value of the mutual information loss 840 may be calculated by using Equation 3 below.

[Equation 3]

$$L_{M.I.}(X) = E[logD(X)] + E[\log(1 - D(R(X))]$$

Referring to Equation 3, $L_{M.I.}$, which represents a value of the mutual information loss 840, may be calculated through expected values (expectation (E) operation) of values obtained by taking logarithmic functions for R(X), which is the output value of the reconstruction model 232, and D(X), which is the output value of the discriminator model 234.

The first AI model 210 may be trained such that the value of the mutual information loss 840 is minimized via backpropagation that applies the mutual information loss 840 calculated by the third AI model 230. For example, during the training process of the first AI model 210, a plurality of weights included in the first AI model 210 may be updated via backpropagation that applies the value of the mutual information loss 840 to the first AI model 210.

When a coded image obtained through the metalens (110 of FIGS. 1 and 3) and the image sensor (120 of FIGS. 1 and 3) is similar to an RGB image of an object captured using a general lens, the coded image may be hijacked from the image sensor 120, or hacked and leaked to the outside so that the RGB image may be reconstructed from the coded image. In this case, there is a problem in that personal information may be leaked to the outside and privacy may be violated.

In the embodiments illustrated in FIGS. 7 and 8, because the first AI model 210 is trained to minimize the correlation representing the similarity between the input RGB image(s) (700-1 to 700-n of FIG. 7 and 800 of FIG. 8) and the simulated image(s) (720-1 to 720-n of FIG. 7 and 810 of FIG. 8) obtained by simulating the optical properties of the metalens 110, there is a low possibility that a human-readable image will be reconstructed from the coded image even when the coded image is leaked to the outside during an inference process using the AI model 200. Therefore, according to an embodiment of the present disclosure, the electronic device 100 may prevent leakage of personal information, protect privacy, and enhance security during the inference process using the AI model 200.

FIG. 9 is a flowchart of a method, performed by the electronic device 100, of obtaining a vision recognition result by using an AI model that is changed according to the purpose or use of a vision task, according to an embodiment of the present disclosure.

Operations S910 and S920 illustrated in FIG. 9 are detailed operations of operation S520 illustrated in FIG. 5. Operation S910 of FIG. 9 may be performed after operation S510 illustrated in FIG. 5 is performed.

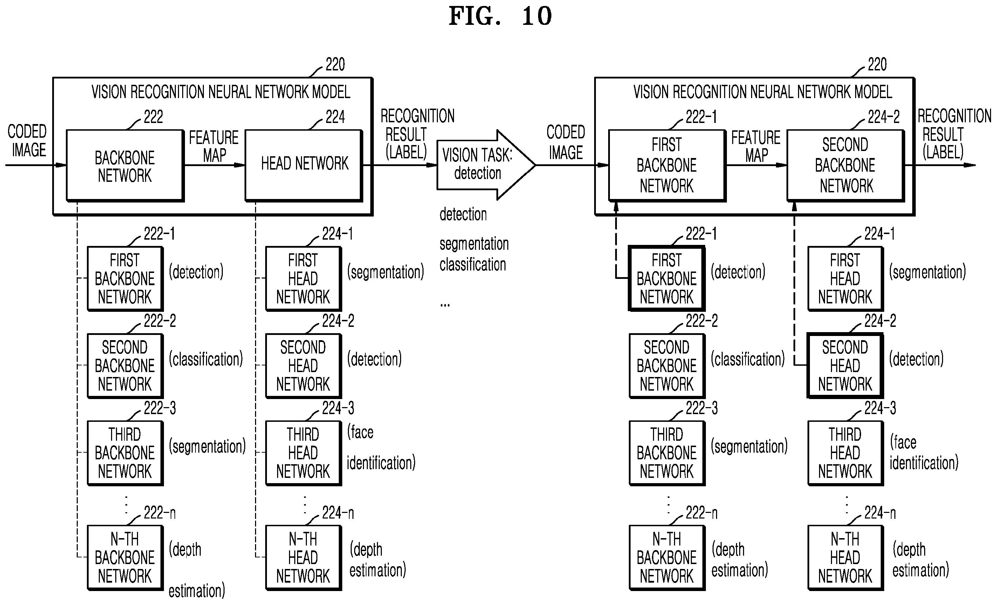

FIG. 10 is a diagram illustrating an operation in which the electronic device 100 changes a configuration of the second AI model 220 based on the purpose or use of a vision task, according to an embodiment of the present disclosure.

Hereinafter, an operation in which the electronic device 100 changes the configuration of the second AI model 220 according to the purpose or use of a vision task is described with reference to FIGS. 9 and 10 together.

In operation S910 of FIG. 9, the electronic device 100 changes at least one of a backbone network and a head network of an AI model based on the purpose or use of a vision task. Referring to FIG. 10 in conjunction with FIG. 9, the

second AI model 220 is a vision recognition neural network model trained to output a result of vision recognition of the coded image when the coded image is input. The second AI model 220 may include a backbone network 222 and a head network 224.

The backbone network 222 is a neural network model trained to extract feature values from the input coded image and obtain a feature map by using the extracted feature values. The backbone network 222 may be implemented as, for example, GoogleNet, ResNet, VGG, DarkNet, ImageNet, or U-Net, but is not limited thereto.

The head network 224 is a neural network model trained to output a label indicating the result of recognition of the coded image from the feature map output from the backbone network 222. The head network 224 may be implemented as, for example, embedding & softmax, pixel-wise softmax, YOLO, or YOLO & embedding, but is not limited thereto.

The processor (130 of FIG. 3) of the electronic device 100 may change at least one of the backbone network 222 and the head network 224 of the AI model based on the purpose or use of a vision task. In the present disclosure, a 'vision task' refers to a task that outputs a vision recognition result from an input image. For example, the vision task may include, but is not limited to, object detection, classification, segmentation, face identification, pose estimation, depth estimation, or the like.

A plurality of backbone networks 222-1 to 222-n may be models optimized and trained for different vision tasks, respectively. Here, the 'optimized model' refers to a neural network model that outputs prediction results with high accuracy and requires short processing time depending on the amount of training data and the purpose and use of the vision task. For example, the first backbone network 222-1 may be a ResNet optimized for 'detection', the second backbone network 222-2 may be a VGG optimized for 'classification', and the third backbone network 222-3 may be a U-Net optimized for 'segmentation', but they are not limited thereto. In an embodiment of the present disclosure, the processor 130 may select a backbone network optimized for the purpose or use of the vision task from among the plurality of backbone networks 222-1 to 222-n. For example, when the purpose or use of the vision task is 'detection' of the object, the processor 130 may select the first backbone network 222-1 optimized for the 'detection' from among the plurality of backbone networks 222-1 to 222-n. The processor 130 may change the backbone network 222 to the first backbone network 222-1 by replacing the existing backbone network 222 with the selected first backbone network 222-1.

A plurality of head networks 224-1 to 224-n may be models optimized and trained for different vision tasks, respectively. For example, the first head network 224-1 may be a pixel-wise softmax optimized for 'segmentation', the second head network 224-2 may be a YOLO optimized for 'detection', and the third head network 224-3 may be a YOLO & embedding model optimized for 'face identification', but they are not limited thereto. In an embodiment of the present disclosure, the processor 130 may select a head network optimized for the purpose or use of the vision task from among the plurality of head networks 224-1 to 224-n. For example, when the purpose or use of the vision task is 'detection' of the object, the processor 130 may select the second backbone network 224-2 optimized for the 'detection' from among the plurality of head networks 224-1 to 224-n. The processor 130 may change the head network 224 to the second head network 224-2 by replacing the existing head network 224 with the selected second head network 224-2.

Referring back to FIG. 9, in operation S920, the electronic device 100 outputs a label indicating a result of recognition of the coded image by inputting the coded image to the AI model in which the at least one of the backbone network and the head network has been changed. Referring to FIG. 10 in conjunction with FIG. 9, the second AI model 220 may include the first backbone network 222-1 and the second head network 224-2. When the coded image is input to the second AI model 220, a feature map may be extracted from the coded image by the first backbone network 222-1. The extracted feature map may be input to the second head network 224-2, and a label indicating a result of recognition of the coded image may be output by the second head network 224-2. In the embodiment illustrated in FIG. 10, because both the first backbone network 222-1 and the second head network 224-2 are neural network models optimized for 'detection', the output label may be a vector value indicating a result of detection of the object.

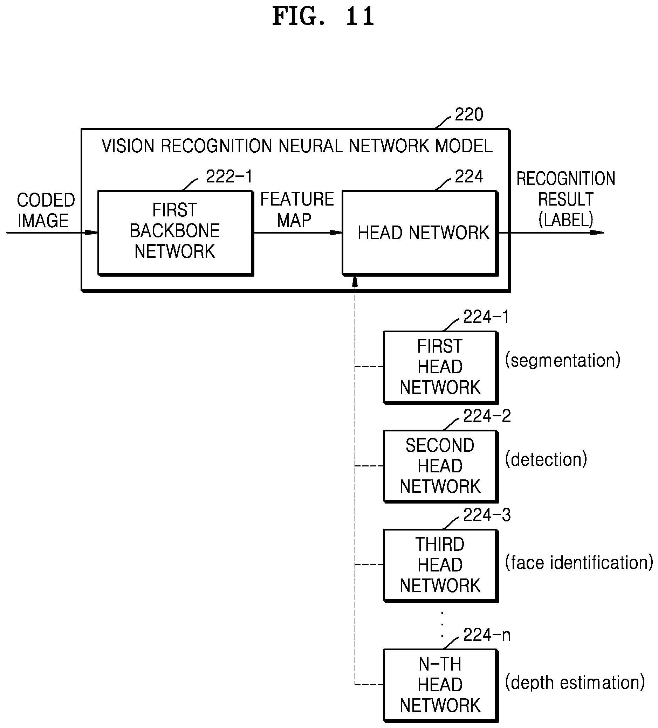

FIG. 11 is a diagram illustrating an operation in which the electronic device 100 changes a configuration of an AI model based on the purpose or use of a vision task, according to an embodiment of the present disclosure.

Referring to FIG. 11, the second AI model 220 is a vision recognition neural network model trained to output a result of vision recognition of the coded image when the coded image is input. The second AI model 220 may include a first backbone network 222-1 and a head network 224. Because the first backbone network 222-1 and the head network 224 are the same as those described with reference to FIG. 10, redundant descriptions are omitted herein.

In the embodiment illustrated in FIG. 11, the backbone network of the second AI model 220 is determined to be the first backbone network 222-1 and may not be changed according to the purpose or use of the vision task. When the purpose or use of the vision task is changed, the head network 224 may be changed. A plurality of head networks 224-1 to 224-n may be models optimized and trained for different vision tasks, respectively. For example, the first head network 224-1 may be a pixel-wise softmax optimized for 'segmentation', the second head network 224-2 may be a YOLO optimized for 'detection', and the third head network 224-3 may be a YOLO & embedding model optimized for 'face identification'. However, the present disclosure is not limited thereto. In an embodiment of the present disclosure, the processor (130 of FIG. 3) of the electronic device 100 may select a head network optimized for the purpose or use of the vision task among the plurality of head networks 224-1 to 224-n, and replace the existing head network 224 with the selected head network. For example, when the purpose or use of the vision task is 'detection' of an object, the processor 130 may select the second head network 224-2 optimized for the 'detection' from among the plurality of head networks 224-1 to 224-n, and replace the existing head network 224 with the selected second head network 224-2.

When the head network 224 is changed according to the purpose or use of the vision task, model parameters of the first backbone network 222-1 may remain unchanged regardless of the changed head network 224. For example, weights of the first backbone network 222-1 may be shared (shared weights) for the head network 224 changed according to the purpose or use of the vision task.

However, the present disclosure is not limited thereto. In an embodiment of the present disclosure, when the head network 224 is changed, model parameters of the first backbone network 222-1 may be changed according to a vision task of the changed head network 224. For example, when the purpose or use of the vision task is 'face identification', the processor 130 may change the head network 224 to the third head network 224-3, and replace the weights of the first backbone network 222-1 with weights optimized for face identification.

In the embodiments illustrated in FIGS. 9 to 11, the electronic device 100 changes at least one of the backbone network 222 and the head network 224 according to the purpose or use of the vision task, such as 'object detection', 'classification', 'segmentation', 'face identification', or 'depth estimation', thereby providing a technical effect of improving the accuracy of a vision recognition result and reducing the processing time.

FIG. 12 is a flowchart of a method, performed by the electronic device 100, of changing a configuration of an AI model in response to replacement or change of a metalens being recognized, according to an embodiment of the present disclosure.

Operations corresponding to operations S1210 to S1230 illustrated in FIG. 12 may be performed after operation S510 illustrated in FIG. 5 is performed. After an operation corresponding to operation S1230 illustrated in FIG. 12 is performed, operation S520 of FIG. 5 may be performed.

FIG. 13 is a diagram illustrating an operation in which the electronic device 100 changes a configuration of the second AI model 220 in response to replacement or change of the metalens 110 being recognized, according to an embodiment of the present disclosure.

Hereinafter, an operation in which an electronic device 100 changes the configuration of the second AI model 220 in response to replacement or change of the metalens 110 being recognized is described with reference to FIG. 12 and FIG. 13 together.

In operation S1210 of FIG. 12, the electronic device 100 recognizes a replacement or change of the metalens.

Referring to FIG. 13 in conjunction with FIG. 12, a user may replace or change the metalens 110 depending on the purpose or use of vision recognition. A metalens may have specific optical properties according to the purpose or use of vision recognition. A coded image is obtained due to the optical properties of hardware, such as a surface pattern of a metalens, and the accuracy of a result of vision recognition, such as object detection, classification, segmentation, face identification, and situation recognition, may be determined according to characteristics of the coded image. For example, a first metalens 110-1 may be a lens optimized for obtaining a coded image for 'face identification', and a second metalens 110-2 may be a lens optimized for obtaining a coded image for 'situation recognition'. In the embodiment illustrated in FIG. 13, the user may replace the first metalens 110-1 with the second metalens 110-2 in accordance with a change in the purpose of vision recognition.

The electronic device 100 may recognize the replacement of the metalens by the user. In an embodiment of the present disclosure, the electronic device 100 may further include a metalens profiler model 160, and the processor (130 of FIG. 3) may recognize a metalens replacement from the first metalens 110-1 to the second metalens 110-2 by using the metalens profiler model 160. When the image sensor 120 is receiving light that is reflected from an object 1300 and then phase-modulated by penetrating through the metalens 110-1 and the metalens is replaced with the second metalens 110-2 by a user input, the image sensor 120 may receive light that is reflected from an object 1320 and then phase-modulated by penetrating through the second metalens 110-2. In an embodiment of the present disclosure, the metalens profiler model 160 may be a neural network model trained, via supervised learning, by applying, as an input, a coded image obtained by the image sensor 120 receiving light of which the phase is modulated by a specific metalens and applying a vector value representing the specific metalens as a ground truth. However, the present disclosure is not limited thereto, and in another embodiment of the present disclosure, a metalens may have an encoded structure with a unique pattern, and the metalens profiler model 160 may be implemented as a classifier model that identifies a specific metalens through an encoded structure. When the replacement of the metalens is recognized, the metalens profiler model 160 may provide a signal indicating that the replacement of the metalens has been recognized to the processor 130.

Referring back to FIG. 12, in operation S1220, the electronic device 100 identifies a vision task corresponding to the replaced or changed metalens. Referring to FIG. 13 in conjunction with FIG. 12, according to recognition of the replacement of the metalens, the processor 130 may identify a vision task optimized for the replaced metalens. Here, a 'vision task optimized for the metalens' may refer to a vision task for which, when the coded image obtained by the image sensor 120 receiving light of which the phase is modulated by penetrating through a specific metalens is input to the second AI model 220, an output vision recognition result is highly accurate and short processing time is required. For example, the first metalens 110-1 may be a metalens optimized for 'face identification' among vision tasks, and the second metalens 110-2 may be a metalens optimized for 'situation recognition'.

Referring back to FIG. 12, in operation S1230, the electronic device 100 changes a backbone network and a head network of an AI model to a backbone network and a head network optimized for the identified vision task. Referring to FIG. 13 together, the second AI model 220 may include the first backbone network 222-1 and the first head network 224-1. Because detailed descriptions of the backbone network and the head network are the same as those described with reference to FIGS. 9 to 11, redundant descriptions are omitted herein. In an embodiment of the present disclosure, the first backbone network 222-1 and the first head network 224-1 may be neural network models optimized for performing 'face identification' among vision tasks. For example, the first backbone network 222-1 may be GoogleNet, and the first head network 224-1 may be YOLO, but they are not limited thereto. The processor 130 may identify the first backbone network 222-1 and the first head network 224-1 included in the second AI model 220. In an embodiment of the present disclosure, the processor 130 may identify which vision task the identified first backbone network 222-1 and the first head network 224-1 are optimized for. The processor 130 may respectively replace the first backbone network 222-1 and the first head network 224-1 with a second backbone network 222-2 and a second head network 224-2 optimized for a vision task 'situation recognition' corresponding to the second metalens 110-2 replaced by the user. For example, the second backbone network 222-2 may be ResNet, and the second head network 224-2 may be SoftMax, but they are not limited thereto.

Referring back to FIG. 12, the electronic device 100 may input a coded image to a changed second AI model 220, and obtain a vision recognition result by performing inference using the second AI model 220. Referring to FIG. 13 in conjunction with FIG. 12, when the second AI model 220 includes the first backbone network 222-1 and the first head network 224-1, a face identification result 1310 with faces marked with bounding boxes may be obtained as an inference result when the coded image is input to the second AI model 220. When the first metalens 110-1 is replaced with the second metalens 110-2 by the user, the second AI model 220 includes the second backbone network 222-2 and the second head network 224-2, and when the coded image is input to the second AI model 220, a label indicating a specific situation (e.g., "Fire" or "Danger") may be obtained as an inference result.

In the embodiments illustrated in FIGS. 12 and 13, the electronic device 100 automatically selects, when a metalens is changed or replaced by the user, a backbone network and a head network optimized for a vision task corresponding to the changed or replaced metalens, and modifies an AI model (the second AI model 220 in FIG. 13) by replacing the existing backbone network and head network with the selected backbone network and head network, thereby providing a technical effect of improving the accuracy of a vision recognition result and shortening the processing time.

FIG. 14 is a diagram illustrating an operation in which the electronic device 100 obtains a vision recognition result by using a depth sensor 170 and an audio sensor 180, as well as a camera system including the metalens 110, according to an embodiment of the present disclosure.

Referring to FIG. 14, the electronic device 100 may further include the depth sensor 170, the audio sensor 180, and a multi-model transformer 190, as well as the metalens 110, the image sensor 120, the processor (130 of FIG. 3), and the memory (140 of FIG. 3). Because the metalens 110 and the image sensor 120 are the same as those described with reference to FIGS. 1 and 3, redundant descriptions are omitted herein.

The depth sensor 170 is a sensor configured to obtain depth information about an object 1400. Here, the 'depth information' means information about a distance from the depth sensor 170 to the specific object 1400. In an embodiment of the present disclosure, the depth sensor 170 may be configured as a time of flight (ToF) sensor that emits light toward the object 1400 by using a light source and obtains depth value information based on the time it takes for the emitted light to be reflected from the object 1400 and be received via a light-receiving sensor of the ToF sensor. However, the present disclosure is not limited thereto, and the depth sensor 170 may be configured as a sensor that obtains depth information by using at least one of a structured light method and a stereo image method.

The audio sensor 180 is a sensor that receives sound emitted by the object 1400 and converts the received sound into an audio signal, which is an electrical signal. In an embodiment of the present disclosure, the audio sensor 180 may include a microphone.

The multi-model transformer 190 may obtain depth value information of the object 1400 from the depth sensor 170 and obtain the audio signal from the audio sensor 180. The multi-model transformer 190 may convert the depth value information and the audio signal into n-dimensional vector values by respectively performing embeddings on the depth value information and the audio signal. The multi-model transformer 190 may input the embedding vectors to the AI model 200.

The AI model 200 may receive a coded image from the image sensor 120, receive the embedding vectors from the multi-model transformer 190, and output a vision recognition result based on the coded image and the embedding vectors. In the embodiment illustrated in FIG. 14, the AI model 200 may output a label value 1410 (e.g., "Bird") according to a recognition result of the object 1400.

FIG. 15 is a diagram illustrating an operation in which the electronic device 100 obtains a vision recognition result by using the depth sensor 170 and the audio sensor 180, as well as a camera system including the metalens 110, according to an embodiment of the present disclosure.

Referring to FIG. 15, the electronic device 100 may include the metalens 110, the image sensor 120, the processor (130 of FIG. 3), the memory (140 of FIG. 3), the depth sensor 170, the audio sensor 180, the AI model 200, a depth-based vision recognition model 240, and a sound-based vision recognition model 250. Because the depth sensor 170 and the audio sensor 180 are the same as those described with reference to FIG. 14, redundant descriptions are omitted.

The depth-based vision recognition model (or depth-based vision algorithm) 240 is a neural network model trained to, when a depth value is input, output a label value corresponding to a result of recognition of the depth value. In an embodiment of the present disclosure, the depth-based vision recognition model 240 may be a neural network model trained, via supervised learning, by applying a vector obtained by embedding a depth value as an input and applying a label corresponding to a result of vision recognition as a ground truth. In the embodiment illustrated in FIG. 15, the depth-based vision recognition model 240 may output a label value (e.g., "Fish") according to a vision recognition result via inferencing when the depth value is input from the depth sensor 170. The depth-based vision recognition model 240 may provide the output label value to an output aggregator model 260.

The sound-based vision recognition model (sound-based vision algorithm) 250 is a neural network model trained to, when an audio signal is input, output a label value corresponding to a result of recognition of the audio signal. In an embodiment of the present disclosure, the sound-based vision recognition model 250 may be a neural network model trained, via supervised learning, by applying a vector obtained by embedding an audio signal as an input and applying a label corresponding to a result of vision recognition of the audio signal as a ground truth. In the embodiment illustrated in FIG. 15, the sound-based vision recognition model 250 may output a label value (e.g., "Twitting") according to a vision recognition result via inferencing when the audio signal is input from the audio sensor 180. The sound-based vision recognition model 250 may provide the output label value to the output aggregator model 260.

The output aggregator model 260 is a model trained to output a final recognition result regarding an object 1500 based on the input data from the AI model 200, the depth-based vision recognition model 240, and the sound-based vision recognition model 250. In an embodiment of the present disclosure, the output aggregator model 260 may be a model trained in a rule-based manner. For example, the output aggregator model 260 may include softmax. However, the present disclosure is not limited thereto, and the output aggregator model 260 may be a neural network model trained to convert input data from the AI model 200, the depth-based vision recognition model 240, and the sound-based vision recognition model 250 into feature vector values by performing embeddings on the input data, and to output a ground truth from the feature vector values. In the embodiment illustrated in FIG. 15, the output integration model 260 may receive a result (e.g., "Bird" and "Yellow") of recognition of the object 1500 from the AI model 200, a result (e.g., "Fish") of recognition of the object 1500 from the depth-based vision recognition model 240, a result (e.g., "Twitting") of recognition of the object 1500 from the sound-based vision recognition model 250, and output a label value 1510 (e.g., "Bird") corresponding to the final recognition result regarding the object 1500.

In the embodiments illustrated in FIGS. 14 and 15, the electronic device 100 outputs vision recognition results regarding the objects 1400 and 1500 by using depth value information and audio signals respectively obtained by the depth sensor 170 and the audio sensor 180, as well as a vision recognition result obtained by inputting the coded image obtained via the metalens 110 and the image sensor 120 to the AI model 200, thereby improving the accuracy and performance of vision recognition compared to a system including only the metalens 110, the image sensor 120, and the AI model 200.

The present disclosure provides an electronic device 100 for obtaining a recognition result of an object from an image obtained through a metalens 110. According to an embodiment of the present disclosure, the electronic device 100 may include the metalens 110 having a pattern formed on a surface thereof and consisting of a plurality of pillars or pins having different shapes, heights, and areas from each other, and having optical properties that modulate a phase of light reflected from an object through the pattern on the surface. According to an embodiment of the present disclosure, the electronic device 100 may include an image sensor 120 configured to obtain a coded image by receiving light reflected from the object and phase-modulated by penetrating through the metalens 110 and converting the received light into electrical signals. According to an embodiment of the present disclosure, the electronic device 100 may include at least one processor 130 configured to input the coded image to an AI model 200, and obtain a label indicating a result of recognizing the object by performing inference using the AI model 200. In an embodiment of the present disclosure, the AI model 200 may be a neural network model trained to obtain a simulated image by inputting a red, green, and blue (RGB) image to a model reflecting the optical properties of the metalens 110 and to output a label indicating a ground truth for the input RGB image as a result of recognition of the obtained simulated image. In an embodiment of the present disclosure, the AI model 200 may be trained to minimize information indicating similarity between the RGB image and the simulated image.

In an embodiment of the present disclosure, the shapes, heights, and areas of the plurality of pillars or pins forming the pattern on the surface of the metalens 110 may be formed based on mathematical modeling parameters according to a result of training the AI model 200.

In an embodiment of the present disclosure, the AI model 200 may include a first AI model 210 trained to output the simulated image from the RGB image by performing convolution of the RGB image with a PSF that mathematically models the optical properties of the metalens 110, and a second AI model 220 trained to output a label indicating a ground truth for the RGB image from the simulated image. The at least one processor 130 may be configured to input the coded image to the second AI model 220 and obtain a label corresponding to a result of recognition of the coded image by performing inference by the second AI model 220.

In an embodiment of the present disclosure, the first AI model 210 may be trained by updating weights via backpropagation that applies mutual information representing similarity between the RGB image and the simulated image as a loss so that the mutual information is minimized.

In an embodiment of the present disclosure, the first AI model 210 may be trained to minimize the loss by minimizing KL-divergence which represents a correlation between distributions of the RGB image and the simulated image in vector spaces.

In an embodiment of the present disclosure, the AI model 200 may further include a third AI model 230 configured to compute a loss representing dissimilarity between the RGB image and the simulated image. The third AI model 230 may include a reconstruction model trained to generate a fake image that imitates the RGB image based on the simulated image, and a discriminator model trained to determine whether an input image is the RGB image or the fake image generated by the reconstruction model.

In an embodiment of the present disclosure, the AI model 200 may include a backbone network trained to extract a feature map from the input coded image and a head network trained to output a label indicating a result of recognition of the coded image from the feature map. The at least one processor 130 may change at least one of the backbone network and the head network based on a purpose or use of a vision task to be recognized by using the AI model 200.

In an embodiment of the present disclosure, in a case that the head network is changed according to the purpose or use of the vision task, a structure of the backbone network applied may be the same regardless of the changed head network.

In an embodiment of the present disclosure, the AI model 200 may further include a metalens profiler model configured to recognize replacement or change of the metalens 110 by a user. In a case that the replacement or change of the metalens 110 is recognized via the metalens profiler model, the at least one processor 130 may be configured to identify a vision task corresponding to the replaced or changed metalens 110. The at least one processor 130 may be configured to change the backbone network and the head network of the AI model 200 to a backbone network and a head network that are predetermined as models optimized for the identified vision task.

In an embodiment of the present disclosure, the electronic device 100 may further include a depth sensor configured to measure a depth value of the object, and an audio sensor configured to obtain an audio signal from the object. The at least one processor 130 may be configured to input the depth value of the object measured by the depth sensor and the audio signal obtained by the audio sensor to the AI model 200, and obtain a label corresponding to the result of recognizing the object by performing inference using the AI model 200.

The present disclosure provides a method, performed by an electronic device 100, of recognizing an object from an image obtained through a metalens 110. The method may include obtaining a coded image by receiving light reflected from the object and phase-modulated by penetrating through the metalens 110 and converting the received light into electrical signals (S510). The method may include inputting the coded image to an AI model 200, and obtaining a label indicating a result of recognizing the object by performing inference using the AI model 200 (S520).

In an embodiment of the present disclosure, a pattern consisting of a plurality of pillars or pins having different shapes, heights, and areas from each other may be formed on a surface of the metalens 110, and the shapes, heights, and areas of the plurality of pillars or pins forming the pattern on the surface of the metalens 110 may be formed based on mathematical modeling parameters according to a result of training the AI model 200.

In an embodiment of the present disclosure, the AI model 200 may include a first AI model 210 trained to output a simulated image from an RGB image by performing convolution of the RGB image with a PSF that mathematically models the optical properties of the metalens 110, and a second AI model 220 trained to output a label indicating a ground truth for the RGB image from the simulated image. In the obtaining of the label (S520), the electronic device 100 may be configured to input the coded image to the second AI model 220 and obtain a label corresponding to a result of recognition of the coded image through inference by the second AI model 220.

In an embodiment of the present disclosure, the first AI model 210 may be trained by updating weights via backpropagation that applies mutual information representing similarity between the RGB image and the simulated image as a loss so that the mutual information is minimized.

In an embodiment of the present disclosure, the first AI model 210 may be trained to minimize the loss by minimizing KL-divergence which represents a correlation between distributions of the RGB image and the simulated image in a vector space.

In an embodiment of the present disclosure, the AI model 200 may further include a third AI model 230 configured

to compute a loss representing dissimilarity between the RGB image and the simulated image. The third AI model 230 may include a reconstruction model trained to generate a fake image that imitates the RGB image based on the simulated image, and a discriminator model trained to determine whether an input image is the RGB image or the fake image generated by the reconstruction model.

In an embodiment of the present disclosure, the AI model 200 may include a backbone network trained to extract a feature map from the input coded image and a head network trained to output a label indicating a result of recognition of the coded image from the feature map. The obtaining of the label (S520) may include changing at least one of the backbone network and the head network based on a purpose or use of a vision task to be recognized by using the AI model 200 (S910). The obtaining of the label (S520) may include outputting a label indicating a result of recognition of the coded image by inputting the coded image to the AI model 200 in which the at least one of the backbone network and the head network has been changed (S920).

In an embodiment of the present disclosure, the method may further include recognizing replacement or change of the metalens 110 by a user (S1210). The method may further include identifying a vision task corresponding to the replaced or changed metalens 110 (S1220). The method may further include changing the backbone network and the head network of the AI model 200 to a backbone network and a head network that are predetermined as models optimized for the identified vision task (S1230).

In an embodiment of the present disclosure, the method may further include obtaining a depth value of the object from a depth sensor and obtaining an audio signal from the object from an audio sensor. The obtaining of the label (S520) may include inputting the depth value of the object measured by the depth sensor and the audio signal obtained by the audio sensor to the AI model 200, and obtaining a label corresponding to a result of recognizing the object by performing inference using the AI model 200.

The present disclosure provides a computer program product including a computer-readable storage medium. The storage medium may include instructions that are readable by an electronic device 100 to obtain a coded image by receiving light reflected from an object and phase-modulated by penetrating through a metalens 110 and converting the received light into electrical signals, and input the coded image to an AI model 200 and obtain a label indicating a result of recognizing the object by performing inference using the AI model 200.

A program executed by the electronic device 100 described in this specification may be implemented as a hardware component, a software component, and/or a combination of the hardware component and the software component. The program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, floppy disks, hard disks, etc.), optical recording media (e.g., compact disc (CD)-ROM and a digital versatile disc (DVD)), etc. The computer-readable recording media may be distributed over computer systems connected through a network so that computer-readable code may be stored and executed in a distributed manner. The media may be readable by a computer, stored in a memory, and executed by a processor.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments disclosed in the present specification may be included in a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of the electronic device 100 or through an electronic market (e.g., Samsung Galaxy Store™). For such electronic distribution, at least a part of the software program may be stored in the storage medium or may be temporarily generated. In this case, the storage medium may be a storage medium of a server of a manufacturer of the electronic device 100, a server of the electronic market, or a relay server for temporarily storing the software program.

In a system including the electronic device 100 and/or a server, the computer program product may include a storage medium of the server or a storage medium of the electronic device 100. Alternatively, in a case where there is a third device (e.g., a wearable device) communicatively connected to the electronic device 100, the computer program product may include a storage medium of the third device. Alternatively, the computer program product may include a software program itself that is transmitted from the electronic device 100 to the third device or that is transmitted from the third device to the electronic device.

In this case, one of the electronic device 100 and the third device may execute the computer program product to perform methods according to disclosed embodiments. Alternatively, at least one of the electronic device 100 or the third device may execute the computer program product to perform the methods according to the disclosed embodiments in a distributed manner.

For example, the electronic device 100 may execute the computer program product stored in the memory (130 of FIG. 2) to control another electronic device communicatively connected to the electronic device 100 to perform the methods according to the disclosed embodiments.

In another example, the third device may execute the computer program product to control an electronic device communicatively connected to the third device to perform the methods according to the disclosed embodiments.

In a case where the third device executes the computer program product, the third device may download the computer program product from the electronic device 100 and execute the downloaded computer program product. Alternatively, the third device may execute the computer program product that is pre-loaded therein to perform the methods according to the disclosed embodiments.

While the embodiments have been described above with reference to limited examples and figures, it will be understood by those of ordinary skill in the art that various modifications and changes in form and details may be made from the above descriptions. For example, adequate effects may be achieved even when the above-described techniques are performed in a different order than that described above, and/or the aforementioned components such as computer systems or modules are coupled or combined in different forms and modes than those described above or are replaced or supplemented by other components or their equivalents.

**Claims**

1. An electronic device (100) comprising:

   a metalens (110) having a pattern formed on a surface thereof and consisting of a plurality of pillars or pins having different shapes, heights, and areas from each other, and having optical properties that modulate a phase of light reflected from an object through the pattern on the surface;
   an image sensor (120) configured to obtain a coded image by receiving light reflected from the object and phase-modulated by penetrating through the metalens (110), and converting the received light into electrical signals; and
   at least one processor (130) configured to input the coded image to an artificial intelligence (AI) model (200), and obtain a label indicating a result of recognizing the object by performing inference using the AI model (200),
   wherein the AI model (200) is a neural network model trained to obtain a simulated image by inputting a red, green, and blue (RGB) image to a model reflecting the optical properties of the metalens 110 and to output a label indicating a ground truth for the input RGB image as a result of recognition of the obtained simulated image, and the AI model (200) is trained to minimize information indicating similarity between the RGB image and the simulated image.

2. The electronic device (100) of claim 1, wherein

   the AI model (200) comprises
   a first AI model (210) trained to output the simulated image from the RGB image by performing convolution of the RGB image with a point spread function (PSF) that mathematically models the optical properties of the metalens (110), and a second AI model (220) trained to output a label indicating a ground truth for the RGB image from the simulated image, and
   the at least one processor (130) is further configured to
   input the coded image to the second AI model (220), and obtain the label corresponding to a result of recognition of the coded image through inference by the second AI model (220).

3. The electronic device (100) of claim 2, further comprising the first AI model (210) is trained by updating weights via backpropagation that applies mutual information representing similarity between the RGB image and the simulated image as a loss so that the mutual information is minimized.

4. The electronic device (100) of claim 3, wherein the first AI model (210) is trained to minimize the loss by minimizing Kullback-Leibler (KL) divergence which represents a correlation between distributions of the RGB image and the simulated image in a vector space.

**5.** The electronic device (100) of claim 3, wherein

the AI model (200) further comprises a third AI model (230) configured to compute a loss representing dissimilarity between the RGB image and the simulated image, and
the third AI model (230) comprises
a reconstruction model trained to generate a fake image that imitates the RGB image, based on the simulated image, and a discriminator model trained to determine whether an input image is the RGB image or the fake image generated by the reconstruction model.

**6.** The electronic device (100) of any one of claims 1 to 5, wherein

the AI model (200) comprises
a backbone network trained to extract a feature map from the input coded image and a head network trained to output the label indicating the result of recognition of the coded image from the feature map, and
the at least one processor (130) is further configured to
change at least one of the backbone network and the head network, based on a purpose or use of a vision task to be recognized by using the AI model (200).

**7.** The electronic device (100) of any one of claims 1 to 6, wherein

the AI model (200) further comprises
a metalens profiler model configured to recognize replacement or change of the metalens (110) by a user, and
the at least one processor (130) is further configured to,
in a case that the replacement or change of the metalens (110) is recognized via the metalens profiler model, identify a vision task corresponding to the replaced or changed metalens (110), and
change the backbone network and the head network of the AI model (200) to a backbone network and a head network that are predetermined as models optimized for the identified vision task.

**8.** A method, performed by an electronic device (100), of obtaining a result of recognizing an object from an image obtained through a metalens (110), the method comprising:

obtaining a coded image by receiving light reflected from the object and phase-modulated by penetrating through the metalens (110) and converting the received light into electrical signals (S510); and
inputting the coded image to an artificial intelligence (AI) model (200), and obtaining a label indicating the result of recognizing the object by performing inference using the AI model (200) (S520),
wherein the AI model (200) is a neural network model trained to obtain a simulated image by inputting a red, green, and blue (RGB) image to a model reflecting optical properties of the metalens (110) and to output a label indicating a ground truth for the input RGB image as a result of recognition of the obtained simulated image, and
the AI model (200) is trained to minimize information indicating similarity between the RGB image and the simulated image.

**9.** The method of claim 8, wherein

the AI model (200) comprises
a first AI model (210) trained to output the simulated image from the RGB image by performing convolution of the RGB image with a point spread function (PSF) that mathematically models the optical properties of the metalens (110), and a second AI model (220) trained to output a label indicating a ground truth for the RGB image from the simulated image, and
the obtaining of the label (S520) comprises
inputting the coded image to the second AI model (220), and obtaining the label corresponding to a result of recognition of the coded image through inference by the second AI model (220).

**10.** The method of claim 9, wherein the first AI model (210) is trained by updating weights via backpropagation that applies mutual information representing similarity between the RGB image and the simulated image as a loss so that the mutual information is minimized.

**11.** The method of claim 10, wherein the first AI model (210) is trained to minimize the loss by minimizing Kullback-Leibler (KL) divergence which represents a correlation between distributions of the RGB image and the simulated image in a vector space.

**12.** The method of claim 10, wherein

the AI model (200) further comprises a third AI model (230) configured to compute a loss representing dissimilarity between the RGB image and the simulated image, and
the third AI model (230) comprises
a reconstruction model trained to generate a fake image that imitates the RGB image, based on the simulated image, and a discriminator model trained to determine whether an input image is the RGB image or the fake image generated by the reconstruction model.

**13.** The method of any one of claims 8 to 12, wherein

the AI model (200) comprises
a backbone network trained to extract a feature map from the input coded image and a head network trained to output the label indicating the result of recognition of the coded image from the feature map, and
the obtaining of the label (S520) comprises:

changing at least one of the backbone network and the head network, based on a purpose or use of a vision task to be recognized by using the AI model (200) (S910); and
outputting a label indicating the result of recognition of the coded image by inputting the coded image to the AI model (200) in which the at least one of the backbone network and the head network has been changed (S920).

**14.** The method of any one of claims 8 to 13, further comprising:

recognizing replacement or change of the metalens (110) by a user (S1210);
identifying a vision task corresponding to the replaced or changed metalens (110) (S1220); and
changing the backbone network and the head network of the AI model (200) to a backbone network and a head network that are predetermined as models optimized for the identified vision task (S1230).

**15.** A computer program product including a computer-readable storage medium, wherein

the storage medium comprises instructions related to a method, performed by an electronic device (100), of obtaining a result of recognizing an object from an image obtained through a metalens (110), the method comprising:
obtaining a coded image by receiving light reflected from the object and phase-modulated by penetrating through the metalens (110) and converting the received light into electrical signals; and
inputting the coded image to an artificial intelligence (AI) model (200), and obtaining a label indicating the result of recognizing the object by performing inference using the AI model (200).

# FIG. 1

| \<OBJECT\> | \<METALENS\> | \<IMAGE SENSOR\> | \<AI (AI) MODEL\> | \<LABEL PREDICTION\> |

"Bird"

# FIG. 2

NEURAL NETWORK MODEL — 200

RGB IMAGE — 20

\<RGB IMAGE\>

image-label pair

"cat" — 22

\<GROUND TRUTH\>

RGB IMAGE DATA

METALENS SIMULATION MODEL — 210

$*$  PSF  $\oplus$  $f_{SENSOR}$  SENSOR NOISE

\<FIRST AI MODEL\>

SIMULATED IMAGE

VISION RECOGNITION NEURAL NETWORK MODEL — 220

\<SECOND AI MODEL\>

RECOGNITION RESULT

LABEL PREDICTION — 24

(Label Prediction)

back propagation

back propagation

LOSS — 26

(Loss)

back propagation

MUTUAL INFORMATION LOSS — 28

(mutual information loss)

EP 4 580 201 A1

# FIG. 3

# FIG. 4

**ELECTRONIC DEVICE** — 100

- METALENS — 110
- IMAGE SENSOR — 120
- PROCESSOR — 130
- MEMORY — 140
- COMMUNICATION INTERFACE — 150

CODED IMAGE →
← RECOGNITION RESULT (LABEL)

**SERVER** — 300

- COMMUNICATION INTERFACE — 310
- PROCESSOR — 320
- MEMORY — 330
  - AI MODEL — 200

EP 4 580 201 A1

# FIG. 5

START

OBTAIN CODED IMAGE BY RECEIVING LIGHT OF
WHICH THE PHASE IS MODULATED BY PENETRATING
THROUGH METALENS AND CONVERTING RECEIVED
LIGHT INTO ELECTRICAL SIGNAL ── S510

INPUT CODED IMAGE TO AI MODEL AND OBTAIN LABEL
INDICATING RESULT OF RECOGNITION OF CODED IMAGE BY
PERFORMING INFERENCE USING AI MODEL ── S520

END

# FIG. 6

FIG. 7

FIG. 8

**200** — NEURAL NETWORK MODEL

**800** — `<RGB IMAGE>` image-label pair

RGB IMAGE DATA

**210** — METALENS SIMULATION MODEL — `<FIRST AI MODEL>`
* (*) PSF (+) SENSOR NOISE

**810** — SIMULATED IMAGE

**220** — VISION RECOGNITION NEURAL NETWORK MODEL — `<SECOND AI MODEL>`

RECOGNITION RESULT

**820** — **LABEL PREDICTION** (Label Prediction)

**802** — "cat" `<GROUND TRUTH (ground truth)>`

back propagation

back propagation

back propagation

**840** MUTUAL INFORMATION LOSS

**830** — **LOSS** (Loss)

**230** — MUTUAL INFORMATION LOSS COMPUTATION MODEL

**234** — DISCRIMINATOR MODEL D(·)

fake image

**232** — RECONSTRUCTION MODEL R(·)

`<THIRD AI MODEL>`

EP 4 580 201 A1

# FIG. 9

```
                    ┌──────────┐
                    │   S510   │
                    └────┬─────┘                        ╭── S520
    ┌ ─ ─ ─ ─ ─ ─ ─ ─ ─ ─│─ ─ ─ ─ ─ ─ ─ ─ ─ ─ ─ ─ ─ ─ ─ ┐
    │   ┌────────────────▼──────────────────┐          │
    │   │ CHANGE AT LEAST ONE OF BACKBONE   │          │
    │   │ NETWORK AND HEAD NETWORK OF AI    ├── S910   │
    │   │ MODEL ACCORDING TO PURPOSE AND    │          │
    │   │ USE OF VISION TASK                │          │
    │   └────────────────┬──────────────────┘          │
    │   ┌────────────────▼──────────────────┐          │
    │   │ OUTPUT LABEL INDICATING RESULT OF │          │
    │   │ RECOGNITION OF CODED IMAGE BY     │          │
    │   │ INPUTTING CODED IMAGE TO AI MODEL ├── S920   │
    │   │ IN WHICH AT LEAST ONE OF BACKBONE │          │
    │   │ NETWORK AND HEAD NETWORK HAS BEEN │          │
    │   │ CHANGED                           │          │
    │   └────────────────┬──────────────────┘          │
    └ ─ ─ ─ ─ ─ ─ ─ ─ ─ ─│─ ─ ─ ─ ─ ─ ─ ─ ─ ─ ─ ─ ─ ─ ─ ┘
                    ┌─────▼────┐
                    │   END    │
                    └──────────┘
```

**FIG. 10**

EP 4 580 201 A1

# FIG. 11

**VISION RECOGNITION NEURAL NETWORK MODEL** /220

CODED IMAGE → **FIRST BACKBONE NETWORK** /222-1 → FEATURE MAP → **HEAD NETWORK** /224 → RECOGNITION RESULT (LABEL)

**FIRST HEAD NETWORK** /224-1 (segmentation)

**SECOND HEAD NETWORK** /224-2 (detection)

**THIRD HEAD NETWORK** /224-3 (face identification)

**N-TH HEAD NETWORK** /224-n (depth estimation)

# FIG. 12

S510

RECOGNIZE REPLACEMENT OR CHANGE OF METALENS —S1210

IDENTIFY VISION TASK CORRESPONDING TO
REPLACED OR CHANGED METALENS —S1220

CHANGE BACKBONE NETWORK AND HEAD NETWORK OF
AI MODEL TO BACKBONE NETWORK AND HEAD NETWORK —S1230
OPTIMIZED FOR IDENTIFIED VISION TASK

S520

# FIG. 13

EP 4 580 201 A1

EP 4 580 201 A1

# FIG. 14

# FIG. 15

## INTERNATIONAL SEARCH REPORT

| International application No. |
|---|
| **PCT/KR2023/010687** |

### A. CLASSIFICATION OF SUBJECT MATTER

**H04N 23/55**(2023.01)i; **H04N 23/54**(2023.01)i; **G03B 17/12**(2006.01)i; **G02B 1/00**(2006.01)i; **G06N 3/08**(2006.01)i; **G06V 10/774**(2022.01)i; **G06V 20/70**(2022.01)i; **G06V 10/80**(2022.01)i; **G06N 3/045**(2023.01)i

According to International Patent Classification (IPC) or to both national classification and IPC

### B. FIELDS SEARCHED

Minimum documentation searched (classification system followed by classification symbols)

H04N 23/55(2023.01); G01B 11/00(2006.01); G03H 1/04(2006.01); G06F 17/30(2006.01); G06T 3/00(2006.01); G06T 7/00(2006.01); G06T 7/11(2017.01); H04N 5/232(2006.01); H04N 5/265(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메타 렌즈(metalens), 부호화 이미지(coded image), 신경망(neural network), RGB 이미지(RGB image), 라벨(label), 시뮬레이션(simulation)

### C. DOCUMENTS CONSIDERED TO BE RELEVANT

| Category* | Citation of document, with indication, where appropriate, of the relevant passages | Relevant to claim No. |
|---|---|---|
| Y | TAN, Shiyu et al. 3D Imaging Using Extreme Dispersion in Optical Metasurfaces. ACS Photonics. 2021, pp. 1421-1429, 26 April 2021. [Retrieved on 10 October 2023]. Retrieved from <https://pubs.acs.org/doi/10.1021/acsphotonics.1c00110>. See abstract; pages 1422-1425; and figure 4. | 1-5,8-12,15 |
| A | | 6-7,13-14 |
| Y | KR 10-1887216 B1 (HAN, Tae Jae) 09 August 2018 (2018-08-09) See paragraph [0042]. | 1-5,8-12,15 |
| Y | KR 10-1975186 B1 (KWANGWOON UNIVERSITY INDUSTRY-ACADEMIC COLLABORATION FOUNDATION) 07 May 2019 (2019-05-07) See claim 1. | 5,12 |
| A | KR 10-2021-0124041 A (ELECTRONICS AND TELECOMMUNICATIONS RESEARCH INSTITUTE) 14 October 2021 (2021-10-14) See paragraphs [0048]-[0112]; claims 1-20; and figures 1-12. | 1-15 |

☑ Further documents are listed in the continuation of Box C.     ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **23 October 2023** | **23 October 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

36

## INTERNATIONAL SEARCH REPORT

| International application No. |
| --- |
| **PCT/KR2023/010687** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | US 2021-0360154 A1 (SLOBODIN, David Elliott) 18 November 2021 (2021-11-18) <br> See paragraphs [0069]-[0300]; claims 1-21; and figures 1-44. | 1-15 |

Form PCT/ISA/210 (second sheet) (July 2022)

## INTERNATIONAL SEARCH REPORT
### Information on patent family members

International application No.

**PCT/KR2023/010687**

| Patent document cited in search report | | | Publication date (day/month/year) | Patent family member(s) | | | Publication date (day/month/year) |
|---|---|---|---|---|---|---|---|
| KR | 10-1887216 | B1 | 09 August 2018 | WO | 2019-103295 | A1 | 31 May 2019 |
| KR | 10-1975186 | B1 | 07 May 2019 | US | 10824914 | B2 | 03 November 2020 |
| | | | | US | 2020-0012896 | A1 | 09 January 2020 |
| KR | 10-2021-0124041 | A | 14 October 2021 | US | 2021-0314546 | A1 | 07 October 2021 |
| US | 2021-0360154 | A1 | 18 November 2021 | | None | | |

Form PCT/ISA/210 (patent family annex) (July 2022)